# EUROPEAN PATENT SPECIFICATION

(11) **EP 1 616 354 B1**
(45) Date of publication and mention of the grant of the patent: **23.05.2012**
(21) Application number: 03816441.4
(22) Date of filing: 27.03.2003
(51) Int. Cl.: H01L 27/00

(54) **GENERATING INTRA-PARTICLE CRYSTALLOGRAPHIC PARAMETER MAPS AND HISTOGRAMS OF A CHEMICALLY PURE CRYSTALLINE PARTICULATE SUBSTANCE**
ERZEUGUNG VON PARTIKELINTERNEN KRISTALLOGRAPHISCHEN PARAMETERABBILDUNGEN UND HISTOGRAMMEN EINER CHEMISCH REINEN KRISTALLINEN TEILCHENSUBSTANZ
GENERATION DE CARTES DE PARAMETRES CRISTALLOGRAPHIQUES ENTRE PARTICULES ET D'HISTOGRAMMES D'UNE SUBSTANCE PARTICULAIRE CRISTALLINE DE PURETE CHIMIQUE

(43) Date of publication of application: 18.01.2006
(73) Proprietor: Green Vision Systems Ltd., 69 710 Tel Aviv (IL)
(72) Inventor: MOSHE, Danny, S., 55 024 Kiryat Ono (IL)
(74) Representative: Beck, Michael Rudolf
(86) International application number: PCT/IL2003/000259
(87) International publication number: WO 2004/086503

(56) References cited:
- WO-A-01/84106
- US-B1- 6 438 261

## Description

### FIELD AND BACKGROUND OF THE INVENTION

The present invention relates to a spectral imaging method for determining physicochemical properties and characteristics of a crystalline particulate substance, and more particularly, to a method for generating intra-particle crystallographic parameter maps and histograms of a chemically pure crystalline particulate substance by spectral imaging and analysis, in general, and by focus-fusion multi-layer spectral imaging and analysis, in particular, of individual particles of the chemically pure crystalline particulate substance. The present invention is generally applicable to a variety of industries, such as the biopharmaceutical, food, and beverage, industries, involved in developing and implementing separation and purification processes, effectiveness studies, formulation levels, large scale manufacturing processes, and, quality control and quality assurance testing procedures and criteria, for chemically pure crystalline particulate substances in the form of raw materials and/or finished products.

In a crystalline solid, herein, referred to as a crystalline particulate substance, to be distinguished from noncrystalline substances such as liquids and amorphous solids or amorphous particulate substances, structurally, the constituent particles, compounds, atoms, molecules, or ions, are arranged in an orderly, repetitive pattern or crystal structure in three dimensions. Herein, the term 'chemically pure crystalline particulate substance' refers to a crystalline particulate substance featuring a plurality of crystalline particles each composed of at least one chemically pure individual chemical compound; where the chemically pure crystalline particulate substance is typically heterogeneous with respect to morphological or geometrical distribution and/or with respect to frequency distribution of physicochemical properties and characteristics, such as concentration, density, particle size, particle geometry, particle shape, particle porosity, and crystallographic parameters of crystal type and crystal class, of the at least one chemically pure individual compound throughout a given sized sample of the plurality of crystalline particles of the chemically pure crystalline particulate substance.

In the field of commercial handling, processing, separating, purifying, and manufacturing, of crystalline particulate substances, including testing and control thereof, especially as applied in the biopharmaceutical industry, there is on-going interest, resources, and activities, being devoted to techniques for measuring, determining, and analyzing, physicochemical data and information relating to crystallographic properties, characteristics, and parameters, of crystalline particulate substances, in general, and of chemically pure crystalline particulate substances, in particular.

In the highly regulated biopharmaceutical industry, an important stage during research and development of a new therapeutic product such as a natural or synthetic drug, high performance chemical, or, micro-organism, featuring at least one chemically pure crystalline particulate substance either in the raw material(s) and/or in the eventual finished pharmaceutical product formulated as a tablet, capsule, caplet, or loose powder, involves extensive and well documented laboratory analytical testing of the physicochemical properties, characteristics, and behavior, of each chemically pure crystalline particulate substance. Analogous, but, less stringent laboratory analytical testing is also performed in the regulated food and beverage industries, regarding research and development of a new food or beverage product such as a natural or synthetic food or beverage ingredient, additive, high performance chemical, or, micro-organism, functioning as a flavor, a preservative, or, a consistency enhancer, featuring at least one chemically pure crystalline particulate substance either in the raw material(s) and/or in the eventual finished food or beverage product formulated as a stand alone compact or loose powder, or, as a compact or loose powder as part of another food or beverage product.

Laboratory analytical testing of a chemically pure crystalline particulate substance, during research and development stages, or, during routine raw or finished product quality control testing, typically includes measuring and determining physicochemical properties and characteristics, such as concentration, density, particle size, particle geometry, particle shape, particle porosity, and/or crystallographic parameters, of a sample of the chemically pure crystalline particulate substance, in a statistically meaningful manner. Typically, such laboratory testing includes measuring and determining dissolution characteristics and behavior of the chemically pure crystalline particulate substance. Dissolution testing provides data and information about the kinetics and thermodynamics of dissolution of a given chemically pure crystalline particulate substance in a variety of solvents.

It is well known in the field of physical chemistry of crystalline particulate matter, that physicochemical properties, characteristics, and behavior, of a crystalline particle, and therefore, of a sample of a crystalline particulate substance featuring a plurality of crystalline particles, in a liquid medium, either in-vitro or in-vivo, are, in varying degrees, related to and functions of morphological distribution and/or frequency distribution of physicochemical properties and characteristics, such as concentration, density, particle size, particle geometry, particle shape, particle porosity, and crystallographic parameters of crystal type and crystal class, of the crystalline particulate substance. Thus, measuring and determining data and information about the crystalline particle physicochemical properties and characteristics, are useful for highly accurately and reproducibly determining, understanding, classifying, and testing dissolution properties and behavior of the crystalline particulate substance. This relationship is clearly applicable to laboratory analytical testing of chemically pure crystalline particulate substances extensively performed by the biopharmaceutical, and, food and beverage industries, as described above.

In the biopharmaceutical industry, information about the physicochemical properties, characteristics, and behavior, of each chemically pure crystalline particulate substance is needed for use in developing and implementing (1) separation and purification processes, (2) pharmacodynamical (metabolic and efficacy) studies, (3) formulation and recommended dosage levels, (4) large scale manufacturing processes, and (5) quality control and quality assurance testing procedures and criteria.

Obtaining an appropriate form of a therapeutic product featuring at least one chemically pure crystalline particulate substance either in the raw material(s) and/or in the eventual finished pharmaceutical product involves developing, implementing, and controlling, a sequence of separation and purification processes. Pharmacodynamical studies include metabolic and efficacy studies of the therapeutic product when ingested by an animal or human during pre-clinical and clinical studies. Metabolic information about the therapeutic product is needed for designing, implementing, and evaluating, efficacy studies, where the effectiveness of the therapeutic product for performing the indicated therapeutic function in a subject is measured. Information and data from the metabolic and efficacy studies are used for developing and establishing final formulation and recommended dosage levels of the new therapeutic product, for large scale manufacturing and dispensing to the consumer market. Large scale manufacturing of such a new therapeutic product requires developing and implementing quality control and quality assurance testing procedures and criteria for each chemically pure crystalline particulate raw material and/or each chemically pure crystalline particulate finished product.

Again, analogous, but, less stringent activities are also applicable and performed in the regulated food and beverage industries, regarding each chemically pure crystalline particulate substance eventually ending up in a new food or beverage product, for large scale manufacturing and distribution to the consumer market.

There are extensive prior art methods, devices, and systems, relating to accurately and reproducibly measuring and determining physicochemical properties and characteristics of particulate substances, which are applicable to crystalline particulate substances, where these are typically based on imaging the particulate substance. Spectral imaging is currently a widely used technique for imaging particles. In spectral imaging, a particulate substance is affected in a way, for example, excitation by incident electromagnetic radiation, such as ultraviolet light, upon the substance, which causes the substance to emit light featuring an emission spectrum. Emitted light is recorded by an instrument such as a scanning interferometer that generates a set of interferogram images, which in turn are used to produce a spectral image, also referred to as a cube image, of the substance. Each cube (spectral) image is a three dimensional data set of voxels (volume of pixels) in which two dimensions are spatial coordinates or position, (x, y), in the substance and the third dimension is the wavelength, (λ), of the imaged (emitted) light of the substance, such that coordinates of each voxel in a spectral image or cube image may be represented as (x, y, λ). Any particular wavelength, (λ), of imaged light of the substance is associated with a set of cube images or spectral 'fingerprints' (pattern of peaks and troughs in the curve of a particle emission spectrum) of the substance in two dimensions, for example, along the x and y directions, whereby voxels having that value of wavelength constitute the pixels of a monochromatic image of the substance at that wavelength. Each cube image, featuring a range of wavelengths of imaged light of the substance is analyzed to produce a physical location distribution or two dimensional map of the chemical composition, or, of some other physicochemical property of the substance, for example, particle size, particle geometry, or, particle shape.

An example of a method and system for real-time, on-line chemical analysis of particulate substances, for example, polycyclic aromatic hydrocarbon (PAH) particles in aerosols, in which the PAH substance is excited to emit light, for example, by fluorescence, is that of U.S. Patent No. 5,880,830, issued to Schechter, and manufactured by GreenVision Systems Ltd. of Tel Aviv, Israel. In the disclosed method, spectral imaging techniques are implemented to acquire an image and analyze the properties of fixed position PAH particles. As part of this method, air is sampled by means of a high volume pump sucking a large volume of air featuring aerosol contaminated with PAH particles onto a substrate, followed by on-line imaging and scene analysis of the stationary particles.

A method of calibration and real-time analysis of particles is described in U.S. Patent No. 6,091,843, to Moshe et al. The method described, is based on using essentially the same system of U.S. Pat. No. 5,880,830, for acquiring spectral images of static particles on a filter. In brief, there is disclosed a method of analyzing particles for the presence of chemical or biological species, by spectral imaging of the particles. The output of the image acquisition is, for each imaged portion of a two-dimensional surface host to the particles, a set of images, each image at a different wavelength. These images are digitized and analyzed by standard image processing methods to produce; for each imaged portion of the two-dimensional surface, spectral images of targets, which are then compared to calibration spectral images of standard targets, for identifying and characterizing the unknown chemical or biological targets or species associated with the particles.

In the disclosure of U.S. Patent No. 6,091,843, targets are identified in static particle images and are classified according to morphology or structural type and spectrum type. Each target is assigned a value of an extensive property. A descriptor vector is formed, where each element of the descriptor vector is the sum of the extensive property values for one target class. The descriptor vector is transformed, for example, to a vector of mass concentrations of chemical species of interest, or of number concentrations of biological species of interest, using a relationship determined in the calibration procedure. In the calibration procedure, spectral images of calibration samples of static particles having known composition are acquired, and empirical morphology types and spectrum types are inferred from the spectral images. Targets are identified in the calibration spectral images, classified according to morphology type and spectrum type, and assigned values of an extensive property. For each calibration sample, a calibration descriptor vector and a calibration concentration vector is formed. A collective relationship between the calibration descriptor vectors and the calibration concentration vectors is found using chemometric methods.

In conventional scene analysis using the above described methods and systems for spectral imaging of individual particles, for example, for each scene, there is auto-focusing, where a best focal position is determined for use in analyzing or classifying particle properties. For some scenes, this is possible, and a focused image may be obtained in an automatic manner. Typically, an auto-focus module is coupled with a computer controlled mechanism that automatically changes the focal position, by moving along an axis parallel to the optical axis of the imaging or focusing sensor, thereby enabling identification of a good focal position. For other scenes, a good focal position is not guaranteed to exist and further image processing based on focus-fusion methodology is required.

When focused images of spatially varying or depth dependent scenes can not be generated by using such auto-focus electro-mechanical means, such that single focal positions can not be identified, focused representations of the scenes can be constructed by combining or fusing selected portions of several defocused images of each scene. This process is referred to as focus-fusion imaging, and the resulting images of such processing are referred to as a focus-fusion images. Defocused images, for example, those acquired during auto-focusing, are fused together such that selected targets in a given scene are in correct focus. Scene targets are detected by analyzing either focused images, if they exist, or, focus-fusion images.

Spectral imaging of spatially varying, depth dependent, or multi-layered samples of particles is not described in the above referenced methods and systems. Imaging and image analysis of a random single two-dimensional layer of a particulate substance are ordinarily straightforward. However, multi-layer imaging and image analysis of depth dependent particulate substances, such as multi-layered dry particles, or, particles in a frozen or immobilized suspension, for example, as obtained from a pharmaceutical, or, food or beverage, particulate sample, are substantially more complex. Nevertheless, there are instances where it is necessary to obtain property and classification information of depth dependent particulate substances, in-situ, for example, as part of sampling a commercial pharmaceutical, or, food or beverage, manufacturing process. More often than not, images obtained of such particulate substances are defocused, and require special image processing techniques, such as focus-fusion, for obtaining useful information about the particulate substances.

Additionally, the above described disclosures feature useful methods and systems for acquiring and analyzing spectral images of particles, but are limited to identifying and quantifying the presence of species on particles, where the species are typically considered particle impurities, and therefore, there is no description of spectral imaging and analysis of a chemically pure particulate substance. Furthermore, there is no description of a method for applying the described pattern recognition and classification procedures for analyzing and correlating 'intra-particle' spectral images of individual particles with respect to morphological or geometrical distribution and/or frequency distribution of physicochemical properties and characteristics, such as concentration, density, particle size, particle geometry, particle shape, particle porosity, and crystallographic parameters, of the at least one chemically pure particulate substance in the host particles, separate from impurity species concentration.

There is disclosed, by the same applicant of the present invention, in PCT International Patent Application No. PCT/IL01/01110, filed Dec. 02, 2001, and published June 13, 2002 with International Publication No. WO 02/47017 A1, entitled: "Method For In-situ Focus-fusion Multi-layer Spectral Imaging And Analysis Of Particulate Samples", taking priority from U.S. Patent Application No. 09/727,753, filed Dec. 04, 2000, now U.S. Patent No. 6,438,261 B1, issued Aug. 20, 2002, of same title, which is a Continuation-in-Part of abandoned U.S. Patent Application No. 09/322,975, filed June 01, 1999, of same title, which is a Continuation-in-Part of U.S. Patent Application No. 09/146,361 (now U.S. Patent No. 6,091,843, previously summarized above) a method for in-situ focus-fusion multi-layer spectral imaging and analysis of depth dependent particulate substances, which is applicable to crystalline particulate substances.

Therein, is described how three-dimensional scene analysis is performed by applying focus-fusion methodology to defocused images acquired by multi-layer spectral imaging of depth dependent particulate substances, whereby the results are shown to be quite useful for detecting and classifying in-situ physicochemical properties and characteristics, such as chemical composition, concentration, density, particle size, particle geometry, and particle shape, which ideally involve multi-layer three-dimensional image analysis.

According to the disclosure of PCT/IL01/01110, a unique method of focus-fusion is applied to focused and defocused images acquired from multi-layer spectral imaging of a depth dependent particulate substance, in order to construct a series of fused focused cube (spectral) image representations of the imaged particles, thereby generating a focused image of essentially each particle in a sample of the particulate substance. The disclosed method introduces and features the use of a uniquely defined and evaluated focus-fusion factor parameter, F_{b}, for correlating and integrating (1) empirically determined particle physicochemical information and parameters relating to (i) particle chemical composition and associated chemistry, and relating to (ii) particle morphology such as particle size and particle shape, with (2) empirically determined particle spectral information and parameters such as (i) pixel intensity, (ii) signal-to-noise ratio (S/N), (iii) image sharpness, (iv) spectral distances, and (v) spectral fingerprints (pattern of peaks and troughs in the curve of a particle emission spectrum) associated with distinct spectral emission patterns of individual particles. The focus-fusion factor parameter, F_{b}, is used in critical steps of image detection, image analysis, and in algorithms for classification of particle properties and characteristics. This uniquely determined parameter enables achievement of high levels of accuracy and precision in detection and classification of the particulate substance, on a global scale, and of the individual particles, on a local scale.

The method disclosed in PCT/IL01/01110 includes collecting and analyzing physicochemical and multi-layer spectral data relating to the particles in the sample, including mapping of three-dimensional positions of particles, particle sizes, and of particle characteristics relating to particle emission spectra. Scene information, in the form of spectral fingerprints, used in the analysis of focus-fusion of the multi-layer spectral images is further processed in order to generate relevant in-situ physicochemical information of the particles, such as particle size distribution, particle morphological features such as structure, form, and shape characteristics, and chemical composition. The focus-fusion multi-layer spectral image analysis includes a sophisticated classification procedure for on-line (real time) extracting useful information relating to particle properties and characteristics needed for generating a statistically based and reliable report applicable to monitoring and/or controlling a wide variety of industrial processes, such as pharmaceutical, food, and beverage, manufacturing processes.

According to that disclosure, the method of focus-fusion multi-layer spectral imaging and analysis of depth dependent particulate samples can be applied to a sample of chemically pure particles, such as chemically pure crystalline particles. However, each described alternative procedure for analyzing the data of the fused cube images of the particles is with respect to either an individual particle as a whole, as the simplest unit or object of imaging and analysis, or, with respect to a sample of many such individual particles. There is no explicit, implicit, or even suggestive, description for analyzing the data, in general, of the fused cube images of the particles with respect to variation of internal or 'intra-particle' physicochemical properties and characteristics, and consequently, in that disclosure, there is no explicit, implicit, or suggestive, description for relating focus-fusion spectral image data, in particular, with respect to variation, in terms of morphological or geometrical distribution and/or frequency distribution, to internal or intra-particle physicochemical properties and characteristics such as concentration, density, particle size, particle geometry, particle shape, particle porosity, and/or crystallographic parameters, of the individual particles.

In actuality, it turns out, especially with regard to standard laboratory analytical testing of particulate substances as currently practiced by pharmaceutical, biotechnology, food, beverage, and chemical, industries, that from a more detailed, realistic viewpoint, measuring, determining, and analyzing, physicochemical properties and characteristics of a sample of a particulate substance, such as of a chemically pure crystalline particulate substance, down to the level or scale of an individual particle as a whole, are significantly limited with respect to realistically, highly accurately and reproducibly, relating spectral imaging and/or other types of empirically obtained and/or determined physicochemical data and information to results of the laboratory analytical testing studies of particulate substances. This phenomenon is particularly evident where a chemically pure particulate substance, featuring at least one chemically pure individual compound, is heterogeneous with respect to variation, in terms of morphological or geometrical distribution and/or frequency distribution, of internal or intra-particle physicochemical properties and characteristics such as concentration, density, particle size, particle geometry, particle shape, particle porosity, and/or crystallographic parameters, of the at least one chemically pure individual compound throughout a given sized sample of the chemically pure particulate substance.

Accordingly, a need was clearly established for measuring, determining, and analyzing, empirically obtained and/or determined physicochemical data and information of particulate substances, with respect to variation, in terms of morphological or geometrical distribution and/or frequency distribution, of internal or intra-particle physicochemical properties and characteristics of the particulate substances, for improving analysis and understanding of the physicochemical properties, characteristics, and behavior, of the particulate substances, thereby, improving current applications and developing new applications of particulate substances for those industries, such as the biopharmaceutical, food, and beverage, industries, which process particulate substances in the form of raw materials and/or finished products.

The same applicant as the present invention, in PCT International Patent Application No. IL01/00366, filed Apr. 19, 2001, and published November 8, 2001 with International Publication No. WO 01/84106 A2, entitled "Method for Generating Intra-particle Morphological Concentration / Density Maps And Histograms Of A Chemically Pure Particulate Substance", taking priority from U.S. Provisional Patent Application No. 60/198,556, filed April 20, 2000, disclose a method for spectral imaging, in general, and focus-fusion-multi-layer spectral imaging, in particular, combined with appropriate pattern recognition and classification analysis, performed on a number of individual particles of a plurality of particles of a chemically pure particulate substance, for forming a plurality of sets of single-particle spectral fingerprint data, where each set is characterized by a single-particle spectral fingerprint spectrum.

According to the method disclosed in PCT/IL01/00366, in each set of single-particle spectral fingerprint data, shifts in spectral parameters, also referred to as 'spectral shifts', are identified, for forming an intra-particle region group featuring a plurality of sub-sets of intra-particle spectral fingerprint pattern data. Each sub-set is characterized by an intra-particle spectral fingerprint pattern spectrum, which is associated with the same single-particle spectral fingerprint spectrum as the other intra-particle spectral fingerprint pattern spectra of the other sub-sets in the same intra-particle region group. Each intra-particle region group is associated with a plurality of intra-particle morphological region type identifiers, where each intra-particle morphological region type identifier is associated with a surface concentration value and a density value of the chemically pure substance in that imaged particle, for forming a set of intra-particle morphological concentration/density data. For each particle, the set of intra-particle morphological concentration/density data is used for generating an intra-particle morphological concentration/density map for illustrating local, intra-particle, morphological distribution of surface concentration and density of the chemically pure substance throughout the imaged particle. For that number of imaged and analyzed particles of the plurality of particles of the particulate substance, a morphological concentration/density histogram, or frequency distribution, is generated from a plurality of sets of the intra-particle morphological concentration/density data, for illustrating a statistically based global morphological distribution of concentration and density throughout the entire chemically pure particulate substance.

The method disclosed in PCT/IL01/00366, introducing and featuring the newly determined sub-classification of spectral imaging data, in general, and of focus-fusion multi-layer spectral imaging data, in particular, illustrates how it is possible, by way of identifying, analyzing, and correlating spectral shifts, to associate different spectral fingerprint patterns of the same particle with different intra-particle morphological regions varying in concentration and/or density of the chemically pure, but morphologically heterogeneous, particulate substance. The novelty of that method is based on identifying shifts in spectral parameters, for example, emission wavelength and/or emission intensity or amplitude, present in classified spectral imaging spectral fingerprint data, in general, and based on identifying shifts in spectral parameters in classified focus-fusion multi-layer spectral imaging spectral fingerprint data, in particular, and using the identified spectral shift data for revealing, correlating, and displaying intra-particle morphological and concentration/density data in the forms of intra-particle morphological concentration/density maps and histograms of the chemically pure particulate substance, which are representative of, and directly applicable to, intra-particle physicochemical analysis and characterization of a chemically pure particulate substance.

The method of that invention, compared to currently used methods, provides new capabilities for effectively and efficiently determining and classifying intra-particle morphological concentration/density data and related information, for application to a wide variety of industries requiring intra-particle physicochemical analysis and characterization of chemically pure particulate substances, such as chemically pure crystalline particulate substances. That invention is especially well suited for analyzing spectral images of chemically pure particulate substances of medicines, for example, medicines containing both chemically pure active ingredients and chemically pure inactive ingredients, whereby there is distinguishing and characterizing physicochemical properties, characteristics, and behavior, of both active and inactive ingredients.

As previously stated above, in the field of commercial handling, processing, separating, purifying, and manufacturing, of crystalline particulate substances, including analysis and control thereof, especially as applied in the biopharmaceutical industry, there is on-going interest, resources, and activities, being devoted to techniques for measuring, determining, and analyzing, physicochemical data and information relating to crystallographic properties, characteristics, and parameters, of crystalline particulate substances, in general, and of chemically pure crystalline particulate substances, in particular. The above is especially relevant when involving chemically pure crystalline particulate substances each featuring or characterized by more than one unique set of crystallographic parameters of crystal type and crystal class.

More specifically, for example, in a chemically pure crystalline particulate substance, one or more of the at least one chemically pure individual chemical compound may exhibit isomerism, involving the existence of a variety of structural isomers and/or stereoisomers of the same chemically pure crystalline particulate substance, typically, characterized by a corresponding variety of different crystallographic parameters of crystal type and crystal class. To a lesser, but, nevertheless, still noticeable, extent or degree of structural or crystallographic difference, one or more of the at least one chemically pure individual chemical compound may exhibit polymorphism, involving crystallization of a compound in at least two distinct forms, giving rise to the existence of a variety of structurally different polymorphs of the same chemically pure crystalline particulate substance, typically, characterized by a corresponding variety of different crystallographic parameters of crystal type and crystal class.

Moreover, in such cases, according to extent of separation and purification processes included in the overall manufacturing processes involving the chemically pure crystalline particulate substance, the chemically pure crystalline particulate substance is expected to be heterogeneous to some degree or extent with respect to morphological or geometrical distribution and/or with respect to frequency distribution of crystallographic parameters of crystal type and crystal class, of the at least one chemically pure individual compound throughout a given sized sample of the chemically pure crystalline particulate substance.

It is well known and very relevant to the biopharmaceutical industry, that different isomers and/or polymorphs of the same chemically pure crystalline particulate substance may exhibit significantly different physicochemical properties and characteristics, such as those related to crystallographic parameters, giving rise to significantly different behavior, efficacy, and therapeutic effects, when subjected to the same laboratory in-vitro conditions and/or clinical in-vivo conditions.

An excellent, realistic example of current concern, of this phenomenon relates to a patented brand name drug, and an *almost* identical generic substitute drug, each marketed to and consumed by post-menopausal women exhibiting symptoms of osteoporosis. Both drugs contain the identically same active ingredient, alendronic acid. However, while the patented brand name drug is manufactured, sold, and consumed, as a sodium trihydrate, having 'three' water molecules in the crystalline particulate structure, the *almost* identical generic substitute drug is manufactured, sold, and consumed, as a sodium monohydrate, having a 'single' water molecule in the crystalline particulate structure. After a period of time during which the *almost* identical generic substitute drug was made available to the public, a clinically statistically significant number of women consuming the sodium monohydrate generic substitute drug developed and exhibited a wide variety of undesirable and/or severe physiological symptoms and medical conditions, apparently directly related to their consumption of the sodium monohydrate generic substitute drug, which were not reported by similar women consuming the sodium trihydrate brand name drug.

From the example just described, it is clearly expected, and may be concluded a priori, that intra-particle crystallographic parameters of crystal type and crystal class of particles of the sodium monohydrate generic substitute drug are measurably different from those of particles of the sodium trihydrate brand name drug, to the extent that the previously described undesirable phenomena take place. Also from this example, it becomes quite logical that crystallographic parameters can therefore be used as a basis for developing and establishing criteria of quality control and/or quality assurance testing during the manufacturing of a drug. This represents just one example of the need for the present invention, of a method for generating intra-particle crystallographic parameter maps and histograms of a chemically pure crystalline particulate substance, which is not fulfilled by implementing prior art techniques and methodologies of spectral imaging of particles.

In the disclosure of PCT/IL01/00366 it is stated "that spectral shifts present in a given group of intra-particle spectral fingerprint patterns of an individual particle are primarily due to local, intra-particle, variation or heterogeneity in particle morphology such as shape or geometry, and porosity, and due to local, intra-particle, variation or heterogeneity in surface concentration and/or density of the chemically pure substance". An important aspect of particle morphology regarding particle shape or geometry, not mentioned or described in, and not obviously derived from, the prior art of spectral imaging, in general, or from the disclosure of PCT/IL01/00366, in particular, is that of crystallographic parameter characterization of crystalline particles, and of crystalline particulate substances consisting of and/or including crystalline particles in their compositions. Furthermore, to date, the inventor of the present invention is unaware of a prior art teaching of a method for generating intra-particle crystallographic parameter maps and histograms of a chemically pure crystalline particulate substance by spectral imaging of individual particles of the chemically pure crystalline particulate substance.

There is thus a need for, and it would be highly advantageous to have a method for generating intra-particle crystallographic parameter maps and histograms of a chemically pure crystalline particulate substance by spectral imaging and analysis, in general, and by focus-fusion multi-layer spectral imaging and analysis, in particular, of individual particles of the chemically pure crystalline particulate substance.

Moreover, there is a need for such a method which is generally applicable to a variety of industries, such as the biopharmaceutical, food, and beverage, industries, currently devoting resources to measuring, analyzing, understanding, and applying, crystallographic data, information, and parameters, of chemically pure crystalline particulate substances in the form of raw materials and/or finished products. This need is especially relevant to such industries involved in using crystallographic data, information, and parameters, of chemically pure crystalline particulate substances, for developing and implementing separation and purification processes, effectiveness studies, formulation levels, large scale manufacturing processes, and, quality control and quality assurance testing procedures and criteria, for chemically pure crystalline particulate substances in the form of raw materials and/or finished products.

Additionally, there is a particular need especially relevant to those sectors of the biopharmaceutical industry which could effectively use crystallographic data, information, and parameters, of chemically pure crystalline particulate substances, for developing and implementing separation and purification processes, pharmacodynamical (metabolic and efficacy) studies, formulation and recommended dosage levels, large scale manufacturing processes, and quality control and quality assurance testing procedures and criteria, for pharmaceutical raw materials and/or finished products which include chemically pure crystalline particulate substances featuring different isomers and/or polymorphs exhibiting significantly different physicochemical properties and characteristics that are a function of crystallographic parameters, giving rise to significantly different behavior, efficacy, and therapeutic effects, when subjected to the same laboratory in-vitro conditions and/or clinical in-vivo conditions.

### SUMMARY OF THE INVENTION

The present invention relates to a method for generating intra-particle crystallographic parameter maps and histograms of a chemically pure crystalline particulate substance by spectral imaging and analysis, in general, and by focus-fusion multi-layer spectral imaging and analysis, in particular, of individual particles of the chemically pure crystalline particulate substance.

Spectral imaging, in general, and focus-fusion multi-layer spectral imaging, in particular, combined with pattern recognition and classification analysis, are performed on individual particles of a chemically pure crystalline particulate substance, for forming sets of single-particle spectral fingerprint data, characterized by single-particle spectral fingerprint spectra. Spectral shifts are identified in the single-particle spectral fingerprint data, for forming intra-particle crystallographic region groups each featuring sub-sets of intra-particle spectral fingerprint pattern data, where selected data elements in each sub-set are shifted relative to corresponding data elements in remaining sub-sets in the same intra-particle crystallographic region group. Each intra-particle crystallographic region group is associated with different crystallographic parameters of crystal type and crystal class, for forming intra-particle crystallographic parameter data, which is used for generating intra particle crystallographic parameter maps and histograms of the chemically pure crystalline particulate substance throughout an entire multi-particle sample.

The present invention is generally applicable to a variety of industries, such as the biopharmaceutical, food, and beverage, industries, currently devoting resources to measuring, analyzing, understanding, and applying, crystallographic data, information, and parameters, of chemically pure crystalline particulate substances in the form of raw materials and/or finished products. The present invention is specifically applicable to such industries involved in using crystallographic data, information, and parameters, of chemically pure crystalline particulate substances, for developing and implementing separation and purification processes, effectiveness studies, formulation levels, large scale manufacturing processes, and, quality control and quality assurance testing procedures and criteria, for chemically pure crystalline particulate substances in the form of raw materials and/or finished products.

Additionally, the present invention is particularly applicable to those sectors of the biopharmaceutical industry which could effectively use the crystallographic data, information, and parameters, of chemically pure crystalline particulate substances, for developing and implementing separation and purification processes, pharmacodynamical (metabolic and efficacy) studies, formulation and recommended dosage levels, large scale manufacturing processes, and quality control and quality assurance testing procedures and criteria, for pharmaceutical raw materials and/or finished products which include chemically pure crystalline particulate substances featuring different isomers and/or polymorphs exhibiting significantly different physicochemical properties and characteristics that are a function of crystallographic parameters, giving rise to significantly different behavior, efficacy, and therapeutic effects, when subjected to the same laboratory in-vitro conditions and/or clinical in-vivo conditions.

Thus, according to the present invention, there is provided a method for generating intra-particle crystallographic parameter maps and histograms of a chemically pure crystalline particulate substance, comprising the steps of claim 1.

According to another aspect of the present invention, there is provided a method for identifying and illustrating intra-particle morphological or geometrical distribution of crystallographic parameters of a chemically pure crystalline particulate substance, comprising the step of claim 2.

The chemically pure crystalline particulate substance is a crystalline particulate substance including a plurality of crystalline particles each having at least one chemically pure individual chemical compound.

The at least one chemically pure individual chemical compound exhibits isomerism and/or polymorphism, and has a number of isomers and/or a number of polymorphs.

The chemically pure crystalline particulate substance is heterogeneous with respect to morphological or geometrical distribution of crystallographic parameters of crystal type and crystal class, of at least one chemically pure individual compound throughout a sample of the chemically pure crystalline particulate substance.

The physicochemical properties and characteristics of the chemically pure crystalline particulate substance are selected from the group consisting of independent of particle depth and dependent of particle depth.

The chemically pure crystalline particulate substance is selected from the group consisting of a separate stand alone powdered entity or substance, and a powdered entity or substance part of another entity or substance in a solid or liquid phase having a function selected from the group consisting of as a substrate of, containing, hosting, delivering, receiving, and combinations thereof, the chemically pure crystalline particulate substance.

The chemically pure crystalline particulate substance is a powder in a form selected from the group consisting of a powder and a powder mixture. The powder is in a configuration or form selected from the group consisting of loose or free flowing, packed, compacted, and combinations thereof. The powder is composed of components selected from the group consisting of inorganic components, organic components, and combinations thereof. The powder is of origin or derivation selected from the group consisting of natural origin or derivation, synthetic origin or derivation, and combinations thereof.

According to further features in preferred embodiments of the invention described below, the chemically pure crystalline particulate substance is a raw material used in manufacturing a product selected from the group consisting of a pharmaceutical product, a food product, and a beverage product.

According to further features in preferred embodiments of the invention described below, the chemically pure crystalline particulate substance is selected from the group consisting of a medicinal or therapeutic powder, a high performance powdered chemical, and a powdered biological specimen. The medicinal or therapeutic powder is part of a pharmaceutical product in a form selected from the group consisting of a tablet, a capsule, a caplet, a loose powder, a gel, a liquid suspension, and a liquid solution.

According to further features in preferred embodiments of the invention described below, in step (a), the spectral images are focus-fusion multi-layer spectral images acquired by focus-fusion multi-layer spectral imaging of the particles of the chemically pure crystalline particulate substance.

According to further features in preferred embodiments of the invention described below, information and data provided in the intra-particle crystallographic parameter histogram are used for a separation or purification process for the chemically pure crystalline particulate substance, according to average frequency distribution percent per particle of intra-particle crystallographic region types of the particles of the chemically pure crystalline particulate substance.

According to further features in preferred embodiments of the invention described below, information and data provided in the intra-particle crystallographic parameter histogram are used for a quality control testing procedure for the chemically pure crystalline particulate substance, based on average frequency distribution percent per particle of intra-particle crystallographic region types of the particles of the chemically pure crystalline particulate substance.

Implementation of the present invention involves performing steps and sub-steps in a manner selected from the group consisting of manually, semi-automatically, fully automatically, and a combination thereof, and involves operation of components, mechanisms, and elements, in a manner selected from the group consisting of manual, semi-automatic, fully automatic, and a combination thereof. Moreover, according to actual steps and sub-steps, components, mechanisms, and elements, used for implementing a particular embodiment of the disclosed invention, steps and sub-steps are performed by using hardware, software, or an integrated combination thereof, and, components, mechanisms, and elements, operate by using hardware, software, or an integrated combination thereof.

In particular, software used for implementing the present invention features operatively connected and functioning written or printed data, in the form of software programs, software routines, software sub-routines, software symbolic languages, software code, software instructions or protocols, or a combination thereof. Hardware used for implementing the present invention features operatively connected and functioning electronic components and elements, in the form of a computer chip, an integrated circuit, an electronic circuit, an electronic sub-circuit, a hard-wired circuit, or a combination thereof, involving digital and/or analog operations. Accordingly, an integrated combination of (1) software and (2) hardware, used for implementing the present invention, features an integrated combination of (1) operatively connected and functioning written or printed data, in the form of software programs, software routines, software sub-routines, software symbolic languages, software code, software instructions or protocols, or a combination thereof, and (2) operatively connected and functioning electronic components and elements, in the form of a computer chip, an integrated circuit, an electronic circuit, an electronic sub-circuit, a hard-wired circuit, or a combination thereof, involving digital and/or analog operations.

### BRIEF DESCRIPTION OF THE DRAWINGS

The present invention is herein described, by way of example only, with reference to the accompanying drawings. With specific reference now to the drawings in detail, it is stressed that the particulars shown are by way of example and for purposes of illustrative description of the preferred embodiments of the present invention only, and are presented in the cause of providing what is believed to be the most useful and readily understood description of the principles and conceptual aspects of the present invention. In this regard, no attempt is made to show structural details of the present invention in more detail than is necessary for a fundamental understanding of the invention, the description taken with the drawings making apparent to those skilled in the art how the several forms of the invention may be embodied in practice. In the drawings:

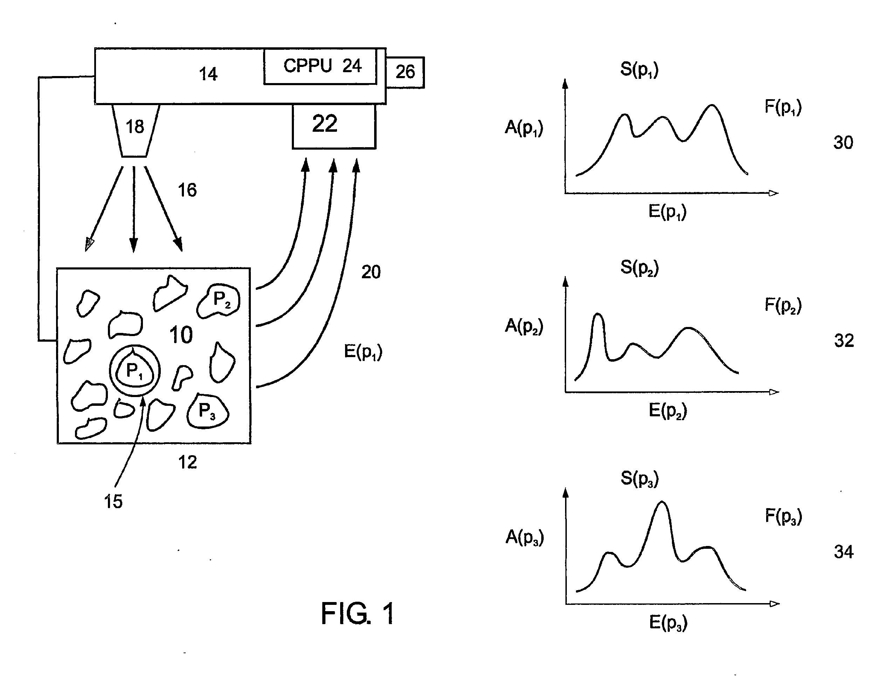

FIG. 1 is a schematic diagram illustrating spectral imaging, in general, and focus-fusion multi-layer spectral imaging, in particular, of an exemplary sample of a chemically pure crystalline particulate substance whose particles feature intra-particle heterogeneous morphology and regions of varying crystallographic parameters of crystal type and crystal class, in accordance with the present invention;

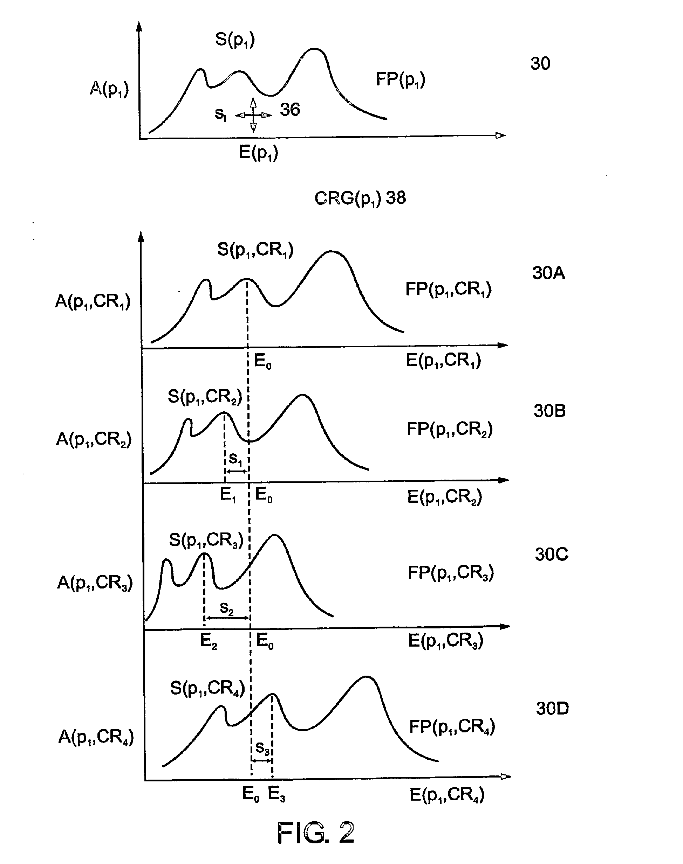

FIG. 2 is a schematic diagram illustrating the step of identifying spectral shifts in intra-particle spectral imaging data, in general, and in focus-fusion multi-layer spectral imaging data, in particular, of the exemplary sample of the chemically pure crystalline particular substance of FIG. 1, in accordance with the present invention;

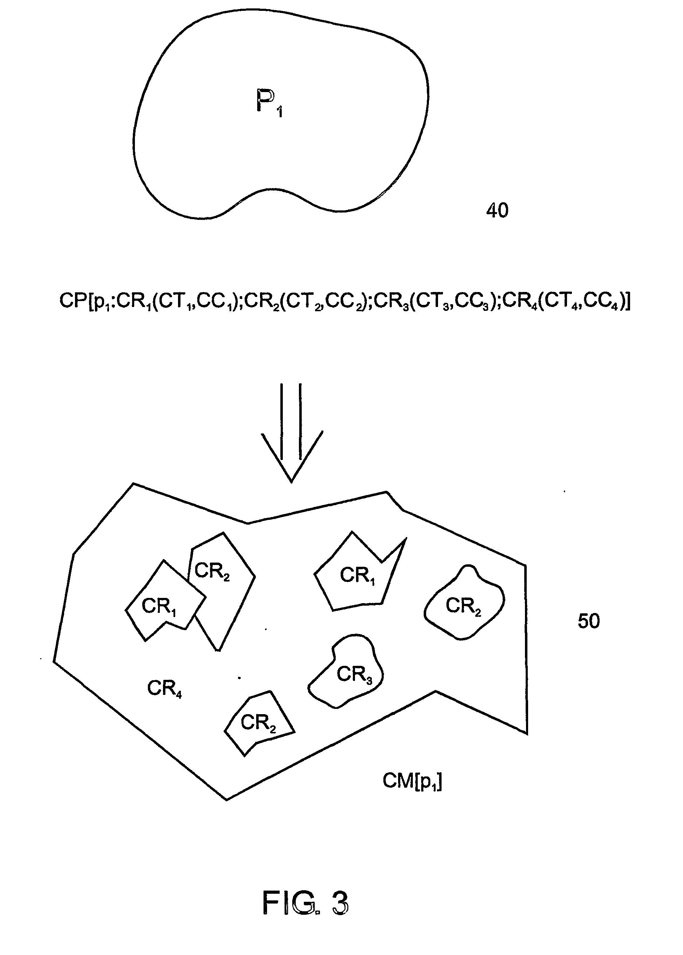

FIG. 3 is a schematic diagram illustrating an intra-particle crystallographic parameter map of an exemplary particle, generated from the exemplary set of intra-particle crystallographic parameter data formed from the spectral imaging data of FIG. 2, in accordance with the present invention; and

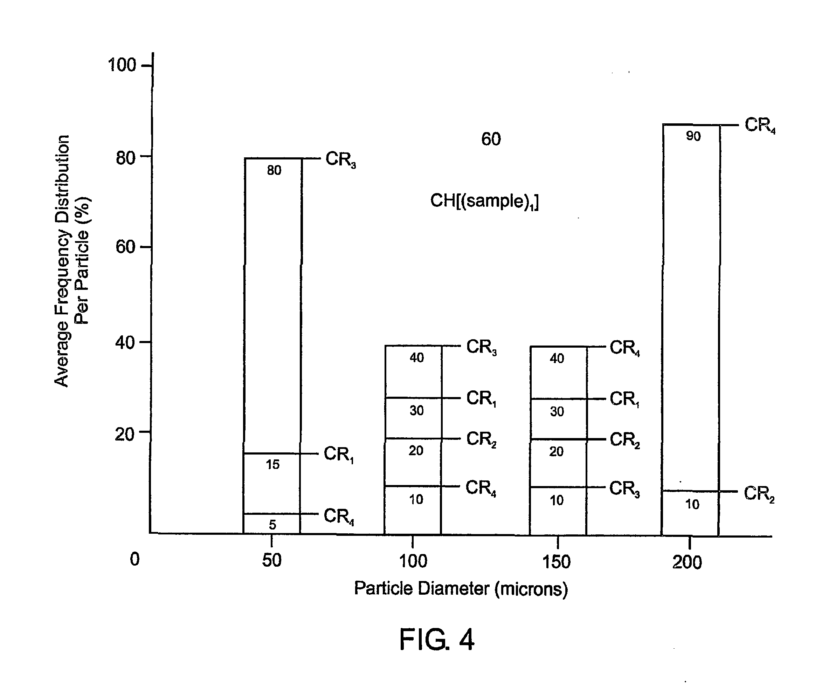

FIG. 4 is a schematic diagram illustrating an exemplary intra-particle crystallographic parameter histogram generated from a plurality of sets of intra-particle crystallographic parameter data, corresponding to a statistically based global morphological or geometrical frequency distribution of the crystallographic parameters of the exemplary sample of the chemically pure crystalline particulate substance throughout the entire multi-particle sample, in accordance with the present invention.

### DESCRIPTION OF THE PREFERRED EMBODIMENTS

The present invention relates to a method for generating intra-particle crystallographic parameter maps and histograms of a chemically pure crystalline particulate substance by spectral imaging and analysis, in general, and by focus-fusion multi-layer spectral imaging and analysis, in particular, of individual particles of the chemically pure crystalline particulate substance.

Spectral imaging, in general, and focus-fusion multi-layer spectral imaging, in particular, combined with pattern recognition and classification analysis, are performed on individual particles of a chemically pure crystalline particulate substance, for forming sets of single-particle spectral fingerprint data, characterized by single-particle spectral fingerprint spectra. Spectral shifts are identified in the single-particle spectral fingerprint data, for forming intra-particle crystallographic region groups each featuring sub-sets of intra-particle spectral fingerprint pattern data, where selected data elements in each sub-set are shifted relative to corresponding data elements in remaining sub-sets in the same intra-particle crystallographic region group. Each intra-particle crystallographic region group is associated with different crystallographic parameters of crystal type and crystal class, for forming intra-particle crystallographic parameter data, which is used for generating intra-particle crystallographic parameter maps and histograms of the chemically pure crystalline particulate substance throughout an entire multi-particle sample.

The present invention successfully provides a new, highly accurate and reproducible, method for generating and applying intra-particle crystallographic parameter data and information of a chemically pure crystalline particulate substance, and widens the scope of presently known techniques and methods for spectral imaging of particulate substances.

The present invention is generally applicable to a variety of industries, such as the biopharmaceutical, food, and beverage, industries, currently devoting resources to measuring, analyzing, understanding, and applying, crystallographic data, information, and parameters, of chemically pure crystalline particulate substances in the form of raw materials and/or finished products. The present invention is specifically applicable to such industries involved in using crystallographic data, information, and parameters, of chemically pure crystalline particulate substances, for developing and implementing separation and purification processes, effectiveness studies, formulation levels, large scale manufacturing processes, and, quality control and quality assurance testing procedures and criteria, for chemically pure crystalline particulate substances in the form of raw materials and/or finished products.

Additionally, the present invention is particularly applicable to those sectors of the biopharmaceutical industry which could effectively use the crystallographic data, information, and parameters, of chemically pure crystalline particulate substances, for developing and implementing separation and purification processes, pharmacodynamical (metabolic and efficacy) studies, formulation and recommended dosage levels, large scale manufacturing processes, and quality control and quality assurance testing procedures and criteria, for pharmaceutical raw materials and/or finished products which include chemically pure crystalline particulate substances featuring different isomers and/or polymorphs exhibiting significantly different physicochemical properties and characteristics that are a function of crystallographic parameters, giving rise to significantly different behavior, efficacy, and therapeutic effects, when subjected to the same laboratory in-vitro conditions and/or clinical in-vivo conditions.

In PCT International Patent Application No. PCT/IL01/01110, by the same applicant of the present invention, filed Dec. 02, 2001, and published June 13, 2002 with International Publication No. WO 02/47017 A1, entitled: "Method For In-situ Focus-fusion Multi-layer Spectral Imaging And Analysis Of Particulate Samples", taking priority from U.S. Patent Application No. 09/727,753, filed Dec, 04, 2000, now U.S. Patent No. 6,438,261 B1, issued Aug. 20, 2002, of same title, previously cited and summarized hereinabove in the Background section, there is disclosed a method for in-situ focus-fusion multi-layer spectral imaging and analysis of depth dependent particulate substances.

While searching for a method of applying spectral imaging, in general, and focus-fusion multi-layer spectral imaging (focusing on a single particle layer or a multiple of particle layers, where each layer corresponds to one spectral image cube per field-of-view of a spectral imaging device), in particular, combined with pattern recognition and classification analysis for improving physicochemical characterization of a sample of a chemically pure, but morphologically heterogeneous, particulate substance, it was unexpectedly determined at the single particle level, that each spectrum, in each group of spectra associated with a set of imaged targets, or 'Blobs' (the terms 'targets' and 'Blobs' are clearly defined and described in detail in PCT International Patent Application No. PCT/IL01/01110), within the same particle and assigned the same spectral fingerprint of that particle, features spectral parameters, for example, emission wavelength and/or emission intensity or amplitude, shifted with respect to the corresponding same spectral parameters of each of the remaining spectra of that same group of spectra. Accordingly, each spectrum in each such group of spectra corresponds to a different particular pattern of the same spectral fingerprint assigned to that group of spectra, associated with an imaged particle. Herein, a pattern of a spectral fingerprint associated with a set of spectra is referred to as a 'spectral fingerprint pattern'. Thus, each group of spectra associated with a characteristic spectral fingerprint of the particle features a plurality of intra-particle spectral fingerprint patterns of the imaged particle.

As previously cited and summarized herein the Background section, above, in PCT Patent Application No. IL01/00366, the same applicant as the present invention disclosed a "Method For Generating Intra-paiticle Morphological Concentration / Density Maps And Histograms Of A Chemically Pure Particulate Substance", taking priority from U.S. Provisional Patent Application No. 60/198,556, filed April 20, 2000,. In that disclosure, the newly determined sub-classification of the spectral imaging data, in general, and of the focus-fusion multi-layer spectral Imaging data, in particular, provides an accurate and precise way of identifying, analyzing, and correlating spectral shifts, for associating different spectral fingerprint patterns of the same particle with different intra-particle morphological regions varying in concentration and/or density of the chemically pure, but morphologically heterogeneous, particulate substance.

Also, as previously stated, in the field of commercial handling, processing, separating, purifying, and manufacturing, of crystalline particulate substances, including analysis and control thereof, especially as applied in the biopharmaceutical industry, there is on-goulg interest, resources, and activities, being devoted to techniques for measuring, determining, and analyzing, physicochemical data and information relating to crystallographic properties, characteristics, and parameters, of crystalline particulate substances, in general, and of chemically pure crystalline particulate substances, in particular. The above is especially relevant when involving chemically pure crystalline particulate substances each featuring or characterized by more than one unique set of crystallographic parameters of crystal type and crystal class.

More specifically, for example, in a chemically pure crystalline particulate substance, one or more of the at least one chemically pure individual chemical compound may exhibit isomerism, involving the existence of a variety of structural isomers and/or stereoisomers of the same chemically pure crystalline particulate substance, typically, characterized by a corresponding variety of different crystallographic parameters of crystal type and crystal class. To a lesser, but, nevertheless, still noticeable, extent or degree of structural or crystallographic difference, one or more of the at least one chemically pure individual chemical compound may exhibit polymorphism, involving crystallization of a compound in at least two distinct forms, giving rise to the existence of a variety of structurally different polymorphs of the same chemically pure crystalline particulate substance, typically, characterized by a corresponding variety of different crystallographic parameters of crystal type and crystal class.

Moreover, in such cases, according to extent of separation and purification processes included in the overall manufacturing processes involving the chemically pure crystalline particulate substance, the chemically pure crystalline particulate substance is expected to be heterogeneous to some degree or extent with respect to morphological or geometrical distribution and/or with respect to frequency distribution of crystallographic parameters of crystal type and crystal class, of the at least one chemically pure individual compound throughout a given sized sample of the chemically pure crystalline particulate substance.

In the disclosure of PCT/IL01/00366 it is stated "that spectral shifts present in a given group of intra-particle spectral fingerprint patterns of an individual particle are primarily due to local, intra-particle, variation or heterogeneity in particle morphology such as shape or geometry, and porosity, and due to local, intra-particle, variation or heterogeneity in surface concentration and/or density of the chemically pure substance". An important aspect of particle morphology regarding particle shape or geometry, not mentioned or described in, and not obviously derived from, the prior art of spectral imaging, in general, or from the disclosure of PCT/IL01/00366, in particular, is that of crystallographic parameter characterization of crystalline particles, and of crystalline particulate substances consisting of and/or including crystalline particles in their compositions. The method for generating intra-particle crystallographic parameter maps and histograms of a chemically pure crystalline particulate substance, of the present invention, is herein disclosed for the first time, and is neither anticipated or obviously derived from the methods disclosed in PCT/IL01/01110 or in PCT/IL01/00366, either singly or in combination.

In a crystalline solid, herein, referred to as a crystalline particulate substance, to be distinguished from noncrystalline substances such as liquids and amorphous solids or amorphous particulate substances, structurally, the constituent particles, compounds, atoms, molecules, or ions, are arranged in an orderly, repetitive pattern or crystal structure in three dimensions. Herein, the term 'chemically pure crystalline particulate substance' refers to a crystalline particulate substance featuring a plurality of crystalline particles each composed of at least one chemically pure individual chemical compound, where the chemically pure crystalline particulate substance is typically heterogeneous with respect to morphological or geometrical distribution and/or with respect to frequency distribution of physicochemical properties and characteristics, such as concentration, density, particle size, particle geometry, particle shape, particle porosity, and crystallographic parameters of crystal type and crystal class, of the at least one chemically pure individual compound throughout a given sized sample of the plurality of crystalline particles of the chemically pure crystalline particulate substance. Moreover, any number of these physicochemical properties and characteristics of the crystalline particulate substance are either independent of particle depth, or are dependent upon particle depth.

The present invention focuses on aspects relating to the morphological or geometrical distribution and frequency distribution of crystallographic parameters of at least one chemically pure individual compound throughout a given sized sample of a chemically pure crystalline particulate substance comprised of the at least one chemically pure individual compound.

An exemplary particular application of the present invention is in those sectors of the biopharmaceutical industry which could effectively use the crystallographic data, information, and parameters, of chemically pure crystalline particulate substances, for developing and implementing separation and purification processes, pharmacodynamical (metabolic and efficacy) studies, formulation and recommended dosage levels, large scale manufacturing processes, and quality control and quality assurance testing procedures and criteria, for pharmaceutical raw materials and/or finished products which include chemically pure crystalline particulate substances featuring different isomers and/or polymorphs exhibiting significantly different physicochemical properties and characteristics that are a function of crystallographic parameters, giving rise to significantly different behavior, efficacy, and therapeutic effects, when subjected to the same laboratory in-vitro conditions and/or clinical in-vivo conditions.

The present invention is applicable to a chemically pure crystalline particulate substance which is a powder or powder mixture in a configuration or form selected from the group consisting of loose or free flowing, packed, compacted, and combinations thereof, being composed of inorganic and/or organic components, and being of natural and/or synthetic origin or derivation. Moreover, the chemically pure crystalline particulate substance is either a separate stand alone powdered entity or substance, or part of another entity or substance in a solid or liquid phase functioning or behaving as a substrate, containing, hosting, delivering, and/or receiving, the chemically pure crystalline particulate substance.

Exemplary types of chemically pure crystalline particulate substances specifically used in the biopharmaceutical industry are naturally and/or synthetically derived medicinal or therapeutic powders or powder mixtures, high performance powdered chemicals, and powdered biological specimens, each featuring at least one active ingredient and/or at least one inactive ingredient, as part of a raw material and/or an eventual finished pharmaceutical product formulated as a tablet, capsule, caplet, loose powder, gel, liquid suspension, or, liquid solution. Exemplary types of chemically pure crystalline particulate substances specifically used in the food and beverage industries are naturally and/or synthetically derived powders or powder mixtures, and high performance powdered chemicals, functioning as flavor, preservative, and/or, consistency enhancers, featuring at least one chemically pure crystalline particulate substance either in the raw material(s) and/or in the eventual finished food or beverage product formulated as a loose or free flowing, packed, compacted, stand alone powdered substance, or, as part of another food or beverage substance.

It is well known to one of ordinary skill in the art that there are four main types of crystals, according to the types of bonds and interactive forces operative in binding the individual species into a particular crystal. These are (i) metallic crystals, (ii) ionic crystals, (iii) van der Waals crystals, and (iv) covalent crystals. Furthermore, crystalline particulate substances are ordinarily classified into seven crystal systems, being (i) triclinic, (ii) monoclinic, (iii) orthorhombic, (iv) hexagonal, (v) tetragonal, (vi) rhombohedral, and (vii) cubic, according to the shape and geometrical dimensions (lengths and directions or angles of inclinations of the vectors) of the unit cell of each crystalline particulate substance.

Moreover, a further division for characterizing crystalline particulate substances is made into thirty-two crystal classes, according to the combinations of symmetry elements which are compatible with each crystal system, where an element of symmetry is an operation which brings the crystal into coincidence with itself, such as rotation about an axis, reflection in a plane, inversion through a center of symmetry, and rotation inversion. It is also well known in the art and science of crystallography that there is a total of two-hundred and thirty-two possible combinations, referred to as space groups, of the symmetry elements of the thirty-two different crystal classes, whereby, any atomic arrangement in a crystal must have the symmetry corresponding to one of these space groups of symmetry operations. Ordinarily, to identify or determine the particular space group of a particular crystal class of a crystalline particulate substance requires detailed examination of the crystal by using x-rays, or another analytical technique capable of identifying or determining atomic structure in a crystal.

The scope, novelty, and inventiveness, of the present invention are based on identifying shifts in spectral parameters, for example, emission wavelength and/or emission intensity or amplitude, present in classified spectral imaging spectral fingerprint data, in general, and based on identifying shifts in spectral parameters in classified focus-fusion multi-layer spectral imaging spectral fingerprint data, in particular, and using the identified spectral shift data for revealing, correlating, and displaying intra-particle crystallographic parameter data in the forms of intra-particle crystallographic parameter maps and histograms of the chemically pure crystalline particulate substance, which are representative of, and directly applicable to, intra-particle physicochemical analysis and characterization of a plurality of particles in a sample of the chemically pure crystalline particulate substance.

It is to be understood that the present invention is not limited in its application to the details of the order, sequence, or number, of steps of operation or implementation of the method, or, to the details of construction, arrangement, composition, or number, of the components of the spectral imaging system, set forth in the following description, drawings, or examples. The present invention is capable of other embodiments or of being practiced or carried out in various ways. Although methods and materials similar or equivalent to those described herein can be used for practicing or testing the present invention, suitable methods and materials are described herein. It is also to be understood that unless otherwise defined, all technical and scientific words, terms, and/or phrases, used herein have the same meaning as commonly understood by one of ordinary skill in the art to which this invention belongs. Phraseology, terminology, and notation, employed herein are for the purpose of description and should not be regarded as limiting.

Steps, components, operation, and implementation of the method for generating intra-particle crystallographic parameter maps and histograms of a chemically pure crystalline particulate substance by spectral imaging, in general, and by focus-fusion multi-layer spectral imaging, in particular, of individual particles of the chemically pure crystalline particulate substance and analyzing the spectral images, according to the present invention, are better understood with reference to the following description and the accompanying drawings. Throughout the following description and accompanying drawings, like reference numbers refer to like elements.

In the following description of the method of the present invention, included are main or principal steps and sub-steps, and main or principal devices, mechanisms, components, and elements, needed for sufficiently understanding proper 'enabling' utilization and implementation of the disclosed method. Accordingly, description of various possible required and/or optional preliminary, intermediate, minor, steps, sub-steps, devices, mechanisms, components, and/or elements, which are readily know by one of ordinary skill in the art, and/or which are available in the prior art and technical literature relating to spectral imaging and analysis, in general, and focus-fusion multi-layer spectral imaging and analysis, in particular, including prior art disclosed by the same inventor of the present invention, are either referenced or at most only briefly indicated herein.

In Step (a) of the method of the present invention, there is acquiring a set of spectral images, in general, and acquiring a set of focus-fusion multi-layer spectral images of one or more particle layers, in particular, by using a spectral imaging system and method thereof, for each of a number of particles of the chemically pure crystalline particulate substance having a plurality of particles.

Step (a) is performed according to the previously summarized same applicant disclosures of PCT Patent Application No. PCT/IL01/01110, U.S. Patent No. 6,091,843, and U.S. Patent No. 5,880,830,. For understanding and implementing the present invention, particularly with respect to **Step (a)**, the following description, based on and integrating methodologies of the above cited disclosures, along with reference to 1~TG. 1 of the present disclosure, is herein provided.

FXC1. 1 is an illustration of spectral imaging, in general, and focus-fusion multi-layer spectral imaging, in particular, of a chemically pure crystalline particulate substance featuring intra-patticle heterogeneous morphology and regions of varying crystallographic parameters. Spectral imaging system **14** is operative for generating, detecting, acquiring, measuring, processing, analyzing, and displaying, spectral imaging data and information, in general, and focus-fusion multi-layer spectral imaging data and information, in particular. For performing these tasks, spectral imaging system **14** includes an imaging sample holding device **12,** such as a three-dimensional xyz translation stage; an imaging energy source **18,** for supplying imaging source energy **16;** an energy collector **22,** for collecting affected energy or emission beam **20** emitted by particles of chemically pure crystalline particulate substance **10;** a central programming and control/data/information signal processing unit (CPPU) **24;** and a display device **26.**

A sample of chemically pure crystalline particulate substance **10,** featuring a plurality ofN individual particles, is positioned in imaging sample holding device **12,** such as a three-dimensional xyz translation stage, part of spectral imaging system **14.** Imaging source energy **16,** preferably, but not limited to, electromagnetic radiation, supplied by imaging energy source **18,** is incident upon chemically pure crystalline particulate substance **10,** and is affected by any combination of absorption, reflection, transmission, diffraction, and/or scattering, mechanisms, by each imaged particle, pᵢ, for a number, n, of imaged particles, for i = 1 to n, where n is less than or equal to N. At least a part of imaging source energy **16** which is affected by particles of chemically pure crystalline particulate substance **10** is subsequently emitted by the particles of chemically pure crystalline particulate substance **10,** in the form of affected energy or emission beam **20.** Affected energy **20,** being in the form of an emission beam, is collected by energy collector **22** of spectral imaging system **14.**

Imaging source energy **16,** preferably being electromagnetic radiation in the form of light, supplied by imaging energy source or light illumination source **18,** for illuminating the particles in the sample of chemically pure crystalline particulate substance **10,** is selected from the group consisting of polychromatic light, monochromatic light, poly- or multi-monochromatic light, and, combinations thereof. An exemplary polychromatic light is white light. An exemplary monochromatic light is selected from the group consisting of visible spectrum monochromatic light, such as red light, blue light, or green light, and, invisible spectrum monochromatic light, such as ultra-violet light or infrared light. An exemplary poly- or multi-chromatic light is a combination of a plurality of at least two different previously listed exemplary monochromatic lights.

For specific implementation of the present invention in accordance with the method for in-situ focus-fusion multi-layer spectral imaging and analysis of particulate samples as disclosed in PCT Patent Application No. PCT/IL01/01110, in **Step (a)**, there is scanning chemically pure crystalline particulate substance. **10,** by adjusting and setting spectral imaging system **14** for spectral imaging at a selected field of view, FOVᵢ, for example, field of view **15,** over the particles of crystalline particulate substance **10,** having central (x, y) coordinates relative to translation stage **12,** by moving translation stage **12** increments of Δx and Δy. Then, there is acquiring a cube (spectral) plane image of crystalline particulate substance **10,** in the selected i-th field of view, FOVᵢ, at a selected j-th differential imaging or focusing distance, Δzᵢⱼ, by focusing imaging system **14** by moving translation stage **12** in the z-direction an increment Δz, until receiving a sharp gray level image of crystalline particulate substance **10.** This corresponds to adjusting and setting imaging system **14** for spectral imaging crystalline particulate substance **10** in the x-y plane of the i-th field of view, FOVᵢ, for a selected imaging distance defined along the z-axis between crystalline particulate substance **10** and the light illumination source **18** of imaging system **14.** This step of acquiring spectral data and information is used for constructing a single 'focused' cube (spectral) plane image of crystalline particulate substance **10,** in accordance with the method described in PCT/IL01101110.

In addition to applying the method disclosed in PCT/IL01/01110, and not described or suggested in that disclosure, in **Step (a)** of the present invention, there is further sub-incrementally scanning chemically pure crystalline particulate substance **10,** by 'finely' adjusting and setting spectral imaging system **14** for obtaining a plurality of spectral images by spectral imaging within a same selected field of view, FOVᵢ, for example, within same field of view **15,** over crystalline particulate substance **10,** having central (x, y) coordinates relative to translation stage **12,** by finely moving translation stage **12** sub-increments of Δx' and Δy'. Further sub-incrementally scanning chemically pure crystalline particulate substance **10** by finely moving translation stage **12** sub-increments of Δx' and Δy', is novel Δx' and beneficial with respect to enhancing and improving spatial acquisition and spatial pattern recognition and classification analysis of the focus-fusion multi-layer and multi-intra field of view spectral imaging data and information relating to crystallographic parameters of chemically pure crystalline particulate substance **10.**

Then, there is acquiring a corresponding plurality of cube (spectral) plane images of crystalline particulate substance **10,** within the same selected i-th field of view, FOVᵢ, at the selected j-th differential imaging or focusing distance, Δzᵢⱼ, by focusing imaging system **14** by moving translation stage **12** in the z-direction an increment Δz, until receiving a sharp gray level image of crystalline particulate substance **10.** This corresponds to adjusting and setting imaging system **14** for spectral imaging crystalline particulate substance **10** at a plurality of x, y positions or coordinates in the x-y plane of the same i-th field of view, FOVᵢ, for a selected imaging distance defined along the z-axis between crystalline particulate substance **10** and the light illumination source **18** of imaging system **14.** This step of acquiring spectral data and information is used for constructing a plurality of single 'focused' cube (spectral) plane images of crystalline particulate substance **10,** in accordance with the method described in PCT/IL01/01110.

Thus, in chemically pure crystalline particulate substance **10,** for each imaged particle, pᵢ, for example, imaged particles **p₁, p₂,** and **p₃,** a set of spectral images, in general, and a set of focus-fusion multi-layer spectral images, in particular, is acquired. The plurality of sets of spectral images, in general, and sets of focus-fusion multi-layer spectral images, in particular, are stored in a single-particle spectral image database.

In **Step (b),** there is forming a set of single-particle spectral fingerprint data from each set of the acquired spectral images, in general, and from each set of the acquired focus-fusion multi-layer spectral images, in particular, of each of the number of imaged particles of the chemically pure crystalline particulate substance, where each set of single-particle spectral fingerprint data is associated with a single particle.

This step is performed for each of the number, n, imaged particles of the chemically pure crystalline particulate substance, for forming a plurality of sets of single-particle spectral fingerprint pattern data, relating to and representative of the entire multi-particle sample of the chemically pure crystalline particulate substance. **Step (b)** is performed by using central programming and control/data/information signal processing unit (CPPU) **24** of spectral imaging system **14,** and the data is stored in a single-particle spectral fingerprint database.

With reference to FIG. 1, for each imaged particle, pᵢ, in chemically pure crystalline particulate substance **10,** each set of spectral images, in general, and the set of focus-fusion multi-layer spectral images, in particular, obtained and stored by operating spectral imaging system **14,** is used for forming a set of single-particle spectral fingerprint data, F(pᵢ). Each set of single-particle spectral fingerprint data, F(pᵢ), is characterized by a single-particle spectral fingerprint spectrum, S(pᵢ), featuring intensity or amplitude, A(pᵢ), of affected energy, E(pᵢ), **20,** plotted as a function of affected energy, E(pᵢ), **20** collected during imaging particle, pᵢ, by spectral imaging system **14.** Preferably, affected energy, E(pᵢ), **20** is expressed in terms of wavelength, frequency, or wavenumber, of electromagnetic radiation, such as fluorescent or phosphorescent light, emitted by an imaged particle, pᵢ. This data is stored in a single-particle spectral fingerprint database.

This process is clearly illustrated in FIG. 1, where each set of single-particle spectral fingerprint data, F(pᵢ), F(p₂), and F(p₃), for each imaged particle **p₁, p₂,** and **p₃,** respectively, is characterized by a single-particle spectral fingerprint spectrum, S(p₁), S(p₂), and S(p₃), respectively, referenced by **30, 32,** and **34,** respectively, featuring intensity or amplitude, A(p₁), A(p₂), and A(p₃), respectively, of affected energy **20,** E(p₁), E(p₂), and E(p₃), respectively, plotted as a function of affected energy **20,** E(p₁), E(p₂), and E(p₃), respectively.

In **Step (c),** there is identifying at least one spectral shift, typically, a plurality of spectral shifts, in each set of the single-particle spectral fingerprint data associated with each imaged particle, for forming an intra-particle crystallographic region group featuring a plurality of sub-sets of intra-particle spectral fingerprint pattern data, where the value of at least one selected data element in each sub-set of intra-particle spectral fingerprint pattern data is shifted relative to the value of each corresponding data element in each remaining sub-set of intra-particle spectral fingerprint pattern data in the same intra-particle crystallographic region group.

This spectral shift identification step is performed for each of the number, n, imaged particles of the chemically pure crystalline particulate substance, for forming a plurality of intra-particle region groups of sub-sets of intra-particle spectral fingerprint pattern data, relating to and representative of the entire multi-particle sample of the chemically pure crystalline particulate substance. **Step (c)** is performed by using central programming and control/data/information signal processing unit (CPPU) **24** of spectral imaging system **14,** and the data is stored in an intra-particle crystallographic region group database.

The identification procedure involves analyzing the plurality of spectral images for those particular spectral images which only 'slightly' differ by relatively small shifts in the value of the affected energy, E(pi), **20,** and/or, only 'slightly' differ by relatively small shifts in the value of the intensity or amplitude, A(pᵢ), of affected energy, E(pᵢ), **20,** collected by energy collector **22** of spectral imaging system **14.** Preferably, the identification procedure involves analyzing the plurality of spectral images for those particular spectral images which only slightly differ by relatively small shifts in the value of the affected energy, E(pᵢ), **20,** in terms of a shift in wavelength, frequency, or, wavenumber, of fluorescent or phosphorescent light emitted by an imaged particle, pᵢ, and collected by spectral imaging system **14.**

Specifically, there is identifying at least one spectral shift, sᵢ, in each set of single-particle spectral fingerprint data, F(pᵢ), associated with an imaged particle, pᵢ, for forming an intra-particle crystallographic region group, herein, referred to as CRG(pᵢ), featuring a plurality of sub-sets of intra-particle spectral fingerprint pattern data, herein, referred to as FP(pᵢ, CRⱼ), where the value of at least one selected data element, for example, affected energy, E(pᵢ), **20,** and/or, intensity or amplitude, A(pᵢ), of affected energy, E(pᵢ), **20,** in each sub-set of intra-particle spectral fingerprint pattern data, FP(pᵢ, CRⱼ), is shifted relative to the value of each corresponding data element in each remaining sub-set of intra-particle spectral fingerprint pattern data, FP(pᵢ, CRₖ), for k not equal to j, in the same intra-particle crystallographic region group, CRG(pᵢ).

Each sub-set of intra-particle spectral fingerprint pattern data, FP(pᵢ, CRⱼ), is characterized by an intra-particle spectral fingerprint pattern spectrum, S(pᵢ, CRⱼ), featuring intensity or amplitude, A(pᵢ, CRⱼ), of affected energy, E(pᵢ, CRⱼ), **20,** plotted as a function of affected energy, E(pᵢ, CRⱼ), **20** collected during imaging particle, pᵢ, by spectral imaging system **14.**

CRⱼ, for j=1 to J, and CRₖ, for k not equal to j, different sub-sets of intra-particle spectral fingerprint pattern data in each intra-particle crystallographic region group, CRG(pᵢ), are intra-particle crystallographic region group sub-set identifiers, used for distinguishing among the plurality of sub-sets of intra-particle spectral fingerprint pattern data, FP(pᵢ, CRⱼ), and FP(pᵢ, CRₖ), associated with the same set of single-particle spectral fingerprint data, F(pᵢ). This classification enables performing next **Step (d)** of forming a set of intra-particle crystallographic parameter data from each intra-particle crystallographic region group, CRG(pᵢ), featuring the plurality of sub-sets of intra-particle spectral fingerprint pattern data, FP(pᵢ, CRⱼ).

Existence of at least one spectral shift, sᵢ, in a given set of single-particle spectral fingerprint data, F(pᵢ), associated with an imaged particle, pi, is due to the local, intra-particle, variation, heterogeneity, or fluctuation in morphological or geometrical distribution, and subsequently, frequency distribution, of a plurality of at least two different crystallographic region types, each associated with crystallographic parameters of crystal type and crystal class, in each intra-particle crystallographic region group, CRG(pᵢ), of the chemically pure crystalline particulate substance of imaged particle, pᵢ. This crystallographic physicochemical phenomenon corresponds to the incident imaging source energy **16** (FIG. 1) being affected slightly differently by each intra-particle crystallographic region type, of an imaged particle, pᵢ, in multi-particle sample of chemically pure crystalline particulate substance **10,** whereby spectral imaging system **14** is used for accurately and reproducibly detecting and analyzing this phenomenon.

The above described process of identifying spectral shifts is clearly illustrated in FIG. 2, a schematic diagram illustrating the step of identifying spectral shifts in intra-particle spectral imaging data, in general, and in focus-fusion multi-layer spectral imaging data, in particular. For example, in the set of single-particle spectral fingerprint data, F(p₁), **30** associated with imaged particle **p₁,** and characterized by single-particle spectral fingerprint spectrum, S(p₁), shown in FIG. 1, there is identifying at least one spectral shift, sᵢ, in the value of at least one selected data element, for example, affected energy, E(pᵢ) **20,** and/or, intensity or amplitude, A(pᵢ) of affected energy, E(pᵢ, CRⱼ), **20,** where such potentially identified spectral shift(s), sᵢ, are referenced in FIG. 2 by the four directional crossed arrows **36,** for forming intra-particle crystallographic region group, CRG(pᵢ) **38.**

In this illustrative example, for imaged particle **pᵢ,** intra-particle crystallographic region group, CRG(p₁) **38** features four sub-sets of intra-particle spectral fingerprint pattern data, FP(p₁, CR₁), FP(p₁, CR₂), FP(p₁, CR₃), and FP(p₁, CR₄), where each sub-set, FP(pᵢ, CRⱼ), is characterized by a corresponding intra-particle spectral fingerprint pattern spectrum, S(p₁, CR₁), S(p₁, CR₂), S(p₁, CR₃), and S(p₁, CR₄), respectively, featuring intensity or amplitude, A(p₁, CR₁), A(p₁, CR₂), A(p₁, CR₃), and A(p₁, CR₄), of affected energy 20, E(p₁, CR₁), E(p₁, CR₂), E(p₁, CR₃), and E(p₁, CR₄), respectively, plotted as a function of affected energy **20,** E(p₁, CR₁), E(p₁, CR₂), E(p₁, CR₃), and E(p₁, CR₄), respectively, referenced by **30A, 30B, 30C,** and **30D,** respectively.

In FIG. 2, three spectral shifts, s₁, s₂, and s₃, are shown identified, whereby the value of at least one selected data element, for example, affected energy **20,** E(pᵢ, CRⱼ), in each sub-set of intra-particle spectral fingerprint pattern data, FP(p₁, CRⱼ), is shifted relative to the value of each corresponding data element, E(p₁, CRₖ,), in each remaining sub-set of intra-particle spectral fingerprint pattern data, FP(p₁, CRₖ), for k not equal to j, in the same intra-particle crystallographic region group, CRG(pₗ) **38.** In this particular illustrative example, the first sub-set of intra-particle spectral fingerprint pattern data; FP(pₗ, CR₁), characterized by the corresponding intra-particle spectral fingerprint pattern spectrum, S(pₗ, CR₁), referenced by **30A,** is shown as a baseline used for identifying and illustrating the three spectral shifts, s₁, s₂, and s₃, in the value of at least one selected data element, in this case, E(p₁, CR₁), from the value of each corresponding data element, in this case, E(p₁, CR₂), E(p₁, CR₃), and E(p₁, CR₄), respectively, in the three remaining sub-sets of intra-particle spectral fingerprint pattern data, FP(p₁, CR₂), FP(p₁, CR₃), and FP(p₁, CR₄), respectively, where each remaining sub-set is characterized by the corresponding intra-particle spectral fingerprint pattern spectrum, S(p₁, CR₂), S(p₁, CR₃), and S(p₁, CR₄), respectively, referenced by **30B, 30C,** and **30D,** respectively.

Specifically, as shown in FIG. 2, spectral shift, s₁, corresponds to a shift in the value of the affected energy data element, E(p1, CRⱼ), from the baseline value of affected energy data element E₀(p₁, CR₁), in the first sub-set of intra-particle spectral fingerprint pattern data, FP(p₁, CR₁), characterized by the first intra-particle spectral fingerprint pattern spectrum, S(p₁, CR₁), **30A,** to a shifted lower value of affected energy data element E₁(p₁, CR₂), in the second sub-set of intra-particle spectral fingerprint pattern data, FP(p₁, CR₂), characterized by the second intra-particle spectral fingerprint pattern spectrum, S(p₁, CR₂), **30B.** As shown in FIG. 2, the value of affected energy E₁ is less than the baseline value of affected energy E₀.

Spectral shift, s₂, corresponds to a shift in the value of the affected energy data element, E(p₁, CRⱼ), from the baseline value of affected energy data element E₀(P₁, CR₁), in the first sub-set of intra-particle spectral fingerprint pattern data, FP(p₁, CR₁), characterized by the first intra-particle spectral fingerprint pattern spectrum, S(p₁, CR₁), **30A,** to a shifted lower value of affected energy data element E₂(p₁, CR₃), in the third sub-set of intra-particle spectral fingerprint pattern data, FP(p₁, CR₃), characterized by the third intra-particle spectral fingerprint pattern spectrum, S(p₁, CR₃), **30C.** As shown in FIG. 2, the value of affected energy E₂ is less than the baseline value of affected energy E₀, and is less than the value of affected energy E₁.

Spectral shift, S₃, corresponds to a shift in the value of the affected energy data element, E(p₁, CRⱼ), from the baseline value of affected energy data element E₀(p₁, CR₁), in the first sub-set of intra-particle spectral fingerprint pattern data, FP(p₁, CR₁), characterized by the first intra-particle spectral fingerprint pattern spectrum, S(p₁, CR₁), **30A,** to a shifted higher value of affected energy data element E₃(P₁, CR₄), in the fourth sub-set of intra-particle spectral fingerprint pattern data, FP(p₁, CR₄), characterized by the fourth intra-particle spectral fingerprint pattern spectrum, S(p₁, CR₄), **30D.** As shown in FIG. 2, the value of affected energy E₃ is greater than the baseline value of affected energy Eo, greater than the value of affected energy E₁, and greater than the value of affected energy Ei.

In **Step (d),** there is forming a set of intra-particle crystallographic parameter data, relating to each imaged particle of the chemically pure crystalline particulate substance, by performing pattern recognition and classification analysis on the intra-particle crystallographic region group of the imaged particle, featuring the plurality of sub-sets of intra-particle spectral fingerprint pattern data associated with the same set of single-particle spectral fingerprint data.

This step is performed for each of the number, n, imaged particles of the chemically pure crystalline particulate substance, for forming a plurality of sets of intra-particle crystallographic parameter data, relating to and representative of the entire multi-particle sample of the chemically pure crystalline particulate substance. **Step (d)** is performed by using central programming and control/data/information signal processing unit (CPPU) **24** of spectral imaging system **14,** and the data is stored in an intra-particle crystallographic parameter database.

Each imaged particle, pᵢ, of chemically pure crystalline particulate substance **10** being spectrally imaged and analyzed for exhibiting spectral shifts, sᵢ, is considered morphologically or geometrically heterogeneous, whereby the plurality of sub-sets of intra-particle spectral fingerprint pattern data, FP(pᵢ, CRⱼ) are used for forming the intra-particle crystallographic region group, CRG(pᵢ), in accordance with preceding **Step (c).** In **Step (d),** for each imaged particle, pᵢ, of chemically pure crystalline particulate substance **10,** the plurality of sub-sets of intra-particle spectral fingerprint pattern data, FP(pᵢ, CRⱼ), featured in the intra-particle crystallographic region group, CRG(pᵢ), are correlated with a corresponding plurality of intra-particle crystallographic region types, CRⱼ, for j = 1 to J different types of intra-particle crystallographic regions identified in, or assigned to, each imaged particle, pᵢ, by performing pattern recognition and classification analysis.

Intra-particle crystallographic region type, CRⱼ, corresponds to the intra-particle crystallographic region group sub-set identifier, CRⱼ, used in **Step (c)** for distinguishing among the plurality of sub-sets of intra-particle spectral fingerprint pattern data, FP(pᵢ CRⱼ), associated with the same set of single-particle spectral fingerprint data, F(pᵢ), as shown in FIG. 2. Each intra-particle crystallographic region type, CRⱼ, is associated with a crystal type, herein, referred to as CTⱼ, and a crystal class, herein, referred to as CCⱼ, of the chemically pure crystalline particulate substance making up each imaged particle, p;. CTⱼ, and CCⱼ vary throughout each imaged particle, pᵢ, in accordance with variation of the associated intra-particle crystallographic region type, CRⱼ. Due to the local, intra-particle, variation, heterogeneity, or fluctuation in morphological or geometrical distribution, and subsequently, frequency distribution, of intra-particle crystallographic region type, CRⱼ, and associated crystallographic parameters of crystal type, CTⱼ, and crystal class, CCⱼ, of the chemically pure crystalline particulate substance of imaged particle, pᵢ, the incident imaging source energy **16** (FIG. 1) is affected differently by each intra-particle crystallographic region type, CR.

This intra-particle crystallographic physicochemical phenomenon existing during imaging particles of chemically pure crystalline particulate substance **10,** enables forming intra-particle crystallographic region group, CRG(pᵢ), in **Step (c),** featuring the plurality of sub-sets of intra-particle spectral fingerprint pattern data, FP(pᵢ CRⱼ), where the value of at least one selected data element in each sub-set, FP(pᵢ, CRⱼ), is shifted relative to the value of each corresponding data element in each remaining sub-set, FP(pᵢ, CRₖ), for k not equal to j, in the same intra-particle crystallographic region group, CRG(pᵢ), as illustratively exemplified in FIG. 2 for imaged particle **p₁.**

Accordingly, in **Step (d),** for each imaged particle, pᵢ, there is forming a set of intra-particle crystallographic parameter data, herein, referred to as CP[pᵢ : CRⱼ(CTⱼ, CCⱼ)], for j = 1 to J different intra-particle crystallographic region types, CRⱼ, and associated crystallographic parameters of crystal type, CTⱼ, and crystal class, CCⱼ, of the chemically pure crystalline particulate substance of imaged particle, pᵢ, by performing pattern recognition and classification analysis on the intra-particle crystallographic region group CRG(pᵢ), of imaged particle, pᵢ, featuring the plurality of sub-sets of intra-particle spectral fingerprint pattern data, FP(pᵢ CRⱼ), exhibiting spectral shifts, sᵢ, associated with the same set of single-particle spectral fingerprint data, F(pᵢ).

For example, with reference to FIG. 2, for imaged particle **p₁,** of chemically pure crystalline particulate substance **10** being morphologically or geometrically heterogeneous, the plurality of four sub-sets of intra-particle spectral fingerprint pattern data, FP(p₁, CR₁) **30A,** FP(p₁, CR₂) **30B,** FP(p₁, CR₃) **30C,** and FP(p₁, CR₄) **30D,** where each sub-set is characterized by the corresponding intra-particle spectral fingerprint pattern spectrum, S(P₁, CR₁), S(p₁, CR₂, S(p₁, CR₃), and S(p₁, CR₄), respectively, exhibiting spectral shifts, s₁, s₂, and s₃, used for forming the intra-particle crystallographic region group, CRG(p₁) **38,** in accordance with preceding **Step (c),** are correlated with the four corresponding different intra-particle crystallographic region types, CR₁, CR₂, CR₃, and CR₄, respectively, and associated crystallographic parameters of crystal type, CT₁, CT_{2,} CT₃, and CT₄, respectively, and crystal class, CC₁, CC₂, CC₃, and CC₄, respectively, of the chemically pure crystalline particulate substance of imaged particle **p₁**.

Accordingly, for imaged, particle **p₁,** featuring, for example, four different intra-particle crystallographic region types, CRⱼ, for j = 1 to 4, the set of intra-particle crystallographic parameter data is written as: CP[ p₁: CRⱼ(CTⱼ, CCⱼ) ], for j = 1 to 4, and the complete set of intra-particle crystallographic parameter data becomes: CP [ p₁: CR₁(CT₁, CC₁); CR₂ (CT₂, CC₂); CR₃(CT₃, CC₃); CR₄(CT₄, CC₄) ], as referenced by **40** in the upper part of FIG. 3, which is used for generating an exemplary intra-particle crystallographic parameter map, CM[p₁] **50,** of imaged particle **p₁,** as shown in the bottom part af F1G. 3, and described hereinbelow in next **Step (e).**

Pattern recognition and classification in **Step (d)** of the present invention is performed by using the same methodology of pattern recognition and classification described in previously cited and summarized same applicant disclosures of PCT Patent Application No. PCT/IL01/01110, U.S. Patent No. 6,091,843, and U.S. Patent No. 5,880,830,

For performing the pattern recognition and classification analysis, there is applying one or more image analysis algorithms, such as detection, pattern recognition and classification, and/or decision image analysis algorithms, to the intra-particle crystallographic region group CRG(pᵢ), of each imaged particle, pᵢ, featuring a plurality of sub-sets of intra-particle spectral fingerprint pattern data, FP(pᵢ CRⱼ), exhibiting spectral shifts, sᵢ, associated with the same set of single-particle spectral fingerprint data, F(pᵢ). The plurality of sub-sets of intra-particle spectral fingerprint pattern data, FP(pᵢ CRⱼ), are analyzed by relating and correlating single particle and intra-particle spectral information and parameters of (i) pixel intensity, (ii) signal-to-noise ratio (S/N), (iii) image sharpness, (iv) spectral distances, and, (v) spectral fingerprints (pattern of peaks, troughs, and shifts, in the curve of a particle emission spectrum) associated with distinct spectral emission patterns of individual particles, that is, spectral fingerprints in the corresponding plurality of intra-particle spectral fingerprint pattern spectrum, S(pᵢ, CRⱼ), for example, as illustrated in FIG. 2 for imaged particle **p₁,** to empirically determined intra-particle physicochemical information and parameters relating to (i) intra-particle chemical composition, concentration, and associated chemistry, and, relating to (ii) intra-particle morphology such as density, size, geometry, shape, porosity, and different intra-particle crystallographic region types associated with the crystallographic parameters of crystal type and crystal class, of the corresponding chemically pure crystalline particulate substance imaged particle, pᵢ.

Calibration data of standard samples of chemically pure crystalline particulate substances with known single particle and intra-particle physicochemical information and parameters, and with known, or unknown, but measurable, single particle and intra-particle spectral imaging information and parameters are used as part of the pattern recognition and classification image analysis. This includes performing pattern recognition and classification with respect to different intra-particle crystallographic region groups, CRG(pᵢ), of imaged particles, pᵢ, each having a plurality of different intra-particle crystallographic region types, CRⱼ, and associated crystallographic parameters of crystal type, CTⱼ, and crystal class, CCⱼ, of each of the at least one chemically pure individual compound throughout the sample of the plurality of particles of chemically pure crystalline particulate substance **10.**

**Step (d)** includes relating the plurality of sub-sets of intra-particle spectral fingerprint pattern data, FP(pᵢ CRⱼ), exhibiting spectral shifts, sᵢ, associated witch the same set of single-particle spectral fingerprint data, F(pᵢ), in the intra-particle crystallographic region group CRG(pᵢ, of each imaged particle, pᵢ, in the sample of the plurality of particles of chemically pure crystalline particulate substance **10,** to empirically determined sub-sets of intra-particle spectral fingerprint pattern data, FP(pᵢ CRⱼ), exhibiting spectral shifts, sᵢ, associated with a same set of single-particle spectral fingerprint data, F(pᵢ), in an intra-particle crystallographic region group CRG(pᵢ), of imaged particles, pᵢ, obtained and stored from spectral imaging, in general, and focus-fusion multi-layer spectral imaging, in particular, calibration or standard samples of chemically pulse crystalline particulate substances, each featuring known local, intra-particle, variation or heterogeneity in intra-particle crystallographic region groups, CRG(pᵢ), of imaged particles, pᵢ, each having a plurality of different intra-particle crystallographic region types, CRⱼ, and associated crystallographic parameters of crystal type, CTⱼ, and crystal class, CCⱼ, of each of the at least one chemically pure individual compound throughout the calibration or standard sample of the plurality of particles of a known chemically pure crystalline particulate substance.

Examples of specific detection, pattern recognition and classification, and/or decision algorithms suitable for image analysis in the method of the present invention are filly described in previously cited U.S. Patent No. 5,880,830, and in previously cited U,S. Patent No. 6,091,843, and references cited therein,. For exemple, as described by Kettig, R.L. and Landgrebe, D., in "classification Of Multispectral Image Data By Extraction And Classification Of Homogeneous Objects", IEEE Transactions on Geoscience Electronics, Vol. GE14 p. 19 (1976). Alternatively, neural networks are trained, for example, as described by Yu, P., Anastassopoulos, V., and Venetsanopoulos, A. N., "Pattern Classification And Recognition Based On Morphology And Neural Networks", Can. J. Elect. and Comp. Eng., Vol. 17 No. 2 (1992) pp, 58-59 and references cited therein, using the calibration spectral descriptor vectors and spectral types, and, the calibration physicochemical descriptor vectors and physicochemical types, as previously summarized above in the Background section, as neural training sets.

The desired relationships between the calibration spectral descriptor vectors and types, and, the calibration physicochemical descriptor vectors and types, are used as trained neural networks, applicable to the plurality of sub-sets of intra-particle spectral fingerprint pattern data, FP(pᵢ CRⱼ), exhibiting spectral shifts, sᵢ, associated with the same set of single-particle spectral fingerprint data, F(pᵢ), in the intra-particle crystallographic region group CRG(pᵢ), of each imaged particle, pᵢ, in the sample of the plurality of particles of chemically pure crystalline particulate substance **10**.

Specifically, with reference to FIG. 2, trained neural networks relating calibration spectral descriptor vectors and types to calibration physicochemical descriptor vectors and types, are applied to analyzing exemplary intra-particle crystallographic region group, CRG(p₁) 38, of imaged particle **p₁**, featuring spectral fingerprints (peaks, troughs, and shifts, sᵢ) in the plurality of four sub-sets of intra-particle spectral fingerprint pattern data, FP(p₁, CR₁) **30A**, FP(p₁, CR₂) **30B**, FP(p₁, CR₃) **30C**, and FP(p₁, CR₄) **30D**, where each sub-set is characterized by the corresponding intra-particle spectral fingerprint pattern spectrum, S(p₁, CR₁), S(p₁, CR₂), S(p₁, CR₃), and S(p₁, CR₄), respectively, exhibiting spectral shifts, s₁, s₂, and s₃.

For example, trained neural networks relating calibration intra-particle spectral emission or spectral fingerprint descriptor vectors and types to calibration intra-particle morphology descriptor vectors and types, are applied to spectral fingerprints (peaks, troughs, and shifts, sᵢ) in the plurality of four sub-sets of intra-particle spectral fingerprint pattern data, FP(p₁, CR₁) **30A**, FP(p₁, CR₂) **30B**, FP(p₁, CR₃) **30C**, and FP(p₁, CR₄) **30D**, characterized by the corresponding intra-particle spectral fingerprint pattern spectrum, S(p₁, CR₁), S(p₁, CR₂), S(p₁, CR₃), and S(p₁, CR₄), respectively, exhibiting spectral shifts, s₁, s₂, and s₃, for identifying actual different intra-particle crystallographic region types, CR₁, CR₂, CR₃, and CR₄, respectively, and associated crystallographic parameters of crystal type, CT₁, CT₂, CT₃, and CT₄, respectively, and crystal class, CC₁, CC₂, CC₃, and CC₄, respectively, in intra-particle crystallographic region group, CRG(p₁) **38**, of imaged particle **p₁** in the sample of chemically pure crystalline particulate substance **10**.

In **Step (e)**, there is generating an intra-particle crystallographic parameter map from each set of intra-particle crystallographic parameter data, for illustrating local, intra-particle, morphological or geometrical distribution of crystallographic region types, each associated with crystallographic parameters of crystal type and crystal class, of the chemically pure crystalline particulate substance throughout the particle associated with that set of intra-particle crystallographic parameter data.

This step is performed for each of the number, n, imaged particles of the chemically pure crystalline particulate substance, for generating n crystallographic parameter maps, relating to and representative of the entire multi-particle sample of chemically pure crystalline particulate substance. **Step (e)** is performed by using central programming and control/data/information signal processing unit (CPPU) **24** of spectral imaging system **14,** and each crystallographic parameter map is stored in an intra-particle crystallographic parameter map database.

Specifically, for each imaged particle, pᵢ, of chemically pure crystalline particulate substance **10** being analyzed, there is generating an intra-particle crystallographic parameter map, CM[pᵢ], from each set of intra-particle crystallographic parameter data, CP[ pᵢ : CRⱼ(CTⱼ, CCⱼ)], for j = 1 to J, featuring J different intra-particle crystallographic region types, CRⱼ, where each intra-particle crystallographic region type is associated with a crystal type, CTⱼ, and a crystal class, CCⱼ, of the chemically pure crystalline particulate substance.

For example, referring again to FIG. 3, for imaged particle, p₁, having the set of intra-particle crystallographic parameter data, CP[ p₁ : CR₁(CT₁, CC₁); CR₂(CT₂, CC₂); CR₃(CT₃, CC₃); CR₄(CT₄, CC₄)] **40**, which is formed according to previously described **Step (d),** above, there is generating intra-particle crystallographic parameter map, CM[p₁] **50**. As illustrated, intra-particle crystallographic parameter map, CM[p₁] **50**, features a heterogeneous distribution of four different intra-particle crystallographic region types, CR₁, CR₂, CR₃, and CR₄, where each intra-particle crystallographic region type, CRⱼ, for j = 1 to 4, is associated with a crystal type, CTⱼ, and a crystal class, CCⱼ, of imaged particle **p₁** in the sample of chemically pure crystalline particulate substance **10**.

This illustrative heterogeneous distribution of four different intra-particle crystallographic region types featured in intra-particle crystallographic parameter map, CM[p₁] **50**, generated from the set of intra-particle crystallographic parameter data, CP[ p₁ : CRⱼ(CTⱼ, CCⱼ) ] **40**, for j = 1 to 4, corresponds to the local, intra-particle, variation, heterogeneity, or fluctuation in morphological or geometrical distribution, and consequently, frequency distribution, of the crystallographic region types, each associated with crystallographic parameters of crystal type and crystal class, of the chemically pure crystalline particulate substance **10** throughout imaged particle **p₁**.

There are several different possible cases relating to the morphological or geometrical heterogeneity of chemically pure crystalline particulate substance **10** throughout imaged particle **p₁**, giving rise to the heterogeneous distribution of four different intra-particle crystallographic region types featured in intra-particle crystallographic parameter map, CM[p₁] **50**. As previously described hereinabove, chemically pure crystalline particulate substance**10** is a crystalline particulate substance featuring a plurality of crystalline particles each composed of at least one chemically pure individual chemical compound, where chemically pure crystalline particulate substance **10** is typically heterogeneous with respect to morphological or geometrical distribution and/or with respect to frequency distribution of physicochemical properties and characteristics, such as concentration, density, particle size, particle geometry, particle shape, particle porosity, and crystallographic parameters of crystal type and crystal class, of the at least one chemically pure individual compound throughout a given sized sample of the plurality of crystalline particles of chemically pure crystalline particulate substance **10**.

The present invention focuses on aspects relating to the morphological or geometrical distribution and frequency distribution of crystallographic parameters of at least one chemically pure individual compound throughout a sample of a chemically pure crystalline particulate substance comprised of the at least one chemically pure individual compound.

Accordingly, a first possible case giving rise to intra-particle crystallographic parameter map, CM[p₁] **50**, is whereby chemically pure crystalline particulate substance **10** features a plurality of crystalline particles, for example, particle **p₁**, each composed of four chemically pure individual chemical compounds, where each chemically pure individual chemical compound is characterized by a different intra-particle crystallographic region type, associated with a crystal type and a crystal class, corresponding to the four different intra-particle crystallographic region types, CR₁, CR₂, CR₃, and CR₄, where each intra-particle crystallographic region type is associated with a crystal type, CT₁, CT₂, CT₃, and CT₄, respectively, and a crystal class, CC₁, CC₂, CC₃, and CC₄, respectively.

A second possible case giving rise to intra-particle crystallographic parameter map, CM[p₁] **50**, is whereby chemically pure crystalline particulate substance **10** features a plurality of crystalline particles, for example, particle **p₁**, each composed of the same chemically pure individual chemical compound, where the chemically pure individual chemical compound exhibits isomerism, existing as four structurally different isomers and/or stereoisomers, where each isomer or stereoisomer is characterized by a different intra-particle crystallographic region type, associated with a crystal type and a crystal class, corresponding to the four different intra-particle crystallographic region types, CR₁, CR₂, CR₃, and CR₄, where each intra-particle crystallographic region type is associated with a crystal type, CT₁, CT₂, CT₃, and CT₄, respectively, and a crystal class, CC₁, CC₂, CC₃, and CC₄, respectively.

A third possible case giving rise to intra-particle crystallographic parameter map, CM[p₁] **50**, is whereby chemically pure crystalline particulate substance **10** features a plurality of crystalline particles, for example, particle **p₁**, each composed of the same chemically pure individual chemical compound, where the chemically pure individual chemical compound exhibits polymorphism, existing as four structurally different polymorphs, where each polymorph is characterized by a different intra-particle crystallographic region type, corresponding to the four different intra-particle crystallographic region types, CR₁, CR₂, CR₃, and CR₄, where each intra-particle crystallographic region type is associated with a crystal type, CT₁, CT₂, CT₃, and CT₄, respectively, and a crystal class, CC₁, CC₂, CC₃, and CC₄, respectively.

There are many additional possible cases giving rise to intra-particle crystallographic parameter map, CM[p₁] **50**, based on variations and/or combinations of the preceding three exemplary cases, relating to the morphological or geometrical distribution of crystallographic parameters of the at least one chemically pure individual compound throughout the sample of the plurality of particles of chemically pure crystalline particulate substance **10**.

In **Step (f)**, there is generating an intra-particle crystallographic parameter histogram, or frequency distribution, from the plurality of sets of the intra-particle crystallographic parameter data, for illustrating a statistically based global morphological or geometrical frequency distribution of intra-particle crystallographic region types, each associated with crystallographic parameters of crystal type and crystal class, of the chemically pure crystalline particulate substance throughout the entire chemically pure crystalline particulate sample.

This step is performed using the previously obtained data sets of the number, n, imaged particles of the chemically pure crystalline particulate substance, for generating the crystallographic parameter histogram, or frequency distribution, relating to and representative of the entire multi-particle sample of chemically pure crystalline particulate substance. **Step (f)** is performed by using central programming and control/data/information signal processing unit (CPPU) **24** of spectral imaging system **14**, and each histogram is stored in a crystallographic parameter histogram database.

Specifically, using the previously obtained data sets of the n imaged particles, pᵢ, for i = 1 to n, making up sample number h, (sample)ₕ, of chemically pure crystalline particulate substance **10** being analyzed, there is generating a intra-particle crystallographic parameter histogram, herein, referred to as CH[(sample)ₕ], from the plurality of sets of intra-particle crystallographic parameter data, CP[ pᵢ : CRⱼ, CT(CRⱼ), CC(CRⱼ)], formed according to previously described **Step (d),** above, for i = 1 to n, and j = 1 to J, for each particle number, i, and for J different intra-particle crystallographic region types, CRⱼ, where J can vary among the imaged particles.

For example, referring to FIG. 4, a schematic diagram illustrating an intra-particle crystallographic parameter histogram generated from a plurality of sets of intra-particle crystallographic parameter map data, from the data sets of the n imaged particles of (sample)₁ representative of chemically pure crystalline particulate substance **10**. Intra-particle crystallographic parameter histogram, CH[(sample)₁ ] **60**, is generated from the plurality of sets of intra-particle crystallographic parameter data, CP[pᵢ : CRⱼ, CT(CRⱼ), CC(CRⱼ)], for i = 1 to n imaged particles making up sample number 1, (sample)₁, of chemically pure crystalline particulate substance **10** being analyzed, and for j = 1 to 4 different intra-particle crystallographic region types. Intra-particle crystallographic parameter histogram, CH[(sample)₁ ] **60** corresponds to a statistical morphological or geometrical frequency distribution of the four different intra-particle crystallographic region types, CR₁, CR₂, CR₃, and CR₄, where each intra-particle crystallographic region type is associated with a crystal type, CT₁, CT₂, CT₃, and CT₄, respectively, and a crystal class, CC₁, CC₂, CC₃, and CC₄, respectively, of the n imaged particles making up sample number 1, (sample)₁, of chemically pure crystalline particulate substance **10**.

In the example illustrated in FIG. 4, intra-particle crystallographic parameter histogram, CH[ (sample)₁ ] **60**, is represented in the form of a graphical plot of the statistical or average frequency distribution per particle (in terms of percent, %, per particle of sample number 1, (sample)₁) featuring each of the four different intra-particle crystallographic region types, CR₁, CR₂, CR₃, and CR₄, each associated with a crystal type, CT₁, CT₂, CT₃, and CT₄, respectively, and a crystal class, CC₁, CC₂, CC₃, and CC₄, respectively, as a function of particle size (in terms of particle diameter (microns)) of the particles in sample number 1, (sample)₁, representative of chemically pure crystalline particulate substance **10**.

A realistic example of industrial applicability of the method of the present invention, is whereby the information and data provided in intra-particle crystallographic parameter histogram, CH[ (sample)₁] **60**, illustrated in FIG. 4, are directly applicable for developing and implementing separation and purification processes, for chemically pure crystalline particulate substance **10**. In particular, with regard to separating and purifying particles of chemically pure crystalline particulate substance **10**, according to the average frequency distribution percent per particle of the four different intra-particle crystallographic region types, CR₁, CR₂, CR₃, and CR₄.

Specifically, as shown by intra-particle crystallographic parameter histogram, CH[ (sample)₁ ] **60**, the average frequency distributions of intra-particle crystallographic region type, CR₁, CR₂, CR₃, and CR₄, per particle of sample number 1, (sample)₁, for particles having diameters of about 50 microns, 100 microns, 150 microns, and 200 microns, are 15 %, 0 %, 80 %, and 5 %, respectively; 30 %, 20 %, 40 %, and 10 %, respectively; 30 %, 20 %, 10 %, and 40 %, respectively; and, 0 %, 10 %, 0 %, and 90 %, respectively.

Accordingly, in an industrial process where it is required to use particles of sample number 1, (sample)₁, of chemically pure crystalline particulate substance **10**, featuring as high a percentage as possible of the third intra-particle crystallographic region type, CR₃, then particles having a diameter of about 50 microns should be selected, via a separation or purification process, from the entire sample number 1, (sample)₁, of particles.

Alternatively, where it is required to use particles of sample number 1, (sample)₁, of chemically pure crystalline particulate substance **10**, featuring as high a percentage as possible of the fourth intra-particle crystallographic region type, CR₄, then particles having a diameter of about 200 microns should be selected, via a separation or purification process, from the entire sample number 1, (sample)₁, of particles.

Alternatively, where it is required to use particles of sample number 1, (sample)₁, of chemically pure crystalline particulate substance **10**, featuring as mixed a percentage as possible of all four intra-particle crystallographic region types, CR₁, CR₂, CR₃, and CR₄, then particles having a diameter of about 100 microns and/or 200 microns should be selected, via a separation or purification process, from the entire sample number 1, (sample)₁, of particles.

The information and data provided in intra-particle crystallographic parameter histogram, CH[ (sample)₁ ] **60**, illustrated in FIG. 4, are also applicable for developing and implementing quality control and quality assurance testing procedures and criteria for chemically pure crystalline particulate substance **10**. In particular, with regard to establishing and using quality control and quality assurance testing criteria, based on the average frequency distribution percent per particle of the four different intra-particle crystallographic region types, CR₁, CR₂, CR₃, and CR₄, for a separation or purification process, such as that indicated above, implemented for separating and purifying particles of chemically pure crystalline particulate substance **10**.

Specifically, in an industrial process where it is required to use separated or purified particles of sample number 1, (sample)₁, of chemically pure crystalline particulate substance **10**, having a specified diameter or range of diameters, and having a specified average frequency distribution percent per particle of at least one specified intra-particle crystallographic region type, CR₁, CR₂, CR₃, and/or CR₄, then the method of the present invention is implemented, through **Step (f)**, for generating intra-particle crystallographic parameter histogram, CH[ (sample)₁ ] **60**, which is used for determining the deviation, and statistical deviation, of each specified average frequency distribution percent per particle of each of the at least one specified intra-particle crystallographic region type, from an established criterion of each specified average frequency distribution percent per particle of each of the at least one specified intra-particle crystallographic region type, for the separated or purified particles having the specified diameter or range of diameters.

The present invention, as illustratively described and exemplified hereinabove, is generally applicable to a variety of industries, such as the biopharmaceutical, food, and beverage, industries, currently devoting resources to measuring, analyzing, understanding, and applying, crystallographic data, information, and parameters, of chemically pure crystalline particulate substances in the form of raw materials and/or finished products. The present invention is specifically applicable to such industries involved in using crystallographic data, information, and parameters, of chemically pure crystalline particulate substances, for developing and implementing separation and purification processes, effectiveness studies, formulation levels, large scale manufacturing processes, and, quality control and quality assurance testing procedures and criteria, for chemically pure crystalline particulate substances in the form of raw materials and/or finished products.

Additionally, the present invention is particularly applicable to those sectors of the biopharmaceutical industry which could effectively use the crystallographic data, information, and parameters, of chemically pure crystalline particulate substances, for developing and implementing separation and purification processes, pharmacodynamical (metabolic and efficacy) studies, formulation and recommended dosage levels, large scale manufacturing processes, and quality control and quality assurance testing procedures and criteria, for pharmaceutical raw material und/or finished products which include chemically pure crystalline particulate substances featuring different isomers and/or polymorphs exhibiting significantly different physicochemical properties and characteristics that are a function of crystallographic parameters, giving rise to significantly different behavior, efficacy, and therapeutic effects, when subjected to the same laboratory in-vitro conditions and/or clinical in-vivo conditions.

It is appreciated that certain features of the invention, which are, for clarity, described in the context of separate embodiments, may also be provided in combination in a single embodiment. Conversely, various features of the invention, which are, for brevity, described in the context of a single embodiment, may also be provided separately or in any suitable subcombination.

Citation or identification of any reference in this application shall not be construed as an admission that such references is available as prior art to the present invention.

While the invention has been described in conjugation with specific embodiments and examples thereof, it is evident that many alternatives, modifications and variations will be apparent to those skilled in the art. Accordingly, it is intended to embrace all such alternatives, modifications and variations that fall within broad scope of the appended claims.

## Claims

1. A method for generating intra-particle crystallographic parameter maps and histograms of a chemically pure crystalline particulate substance, comprising the steps of:
(a) acquiring a set of spectral images by a spectral imaging system for each of a number of particles of the chemically pure crystalline particulate substance having a plurality of said particles, by adjusting and setting said spectral imaging system for spectral imaging at selected fields of view and at selected differential imaging distances over said particles;
(b) forming a set of single-particle spectral fingerprint data from each said set of acquired spectral images of each said imaged particle, wherein each said set of single-particle spectral fingerprint data is **characterized by** a single-particle spectral fingerprint spectrum featuring intensity or amplitude of incident imaging energy affected by said imaged particle and collected during said spectral imaging plotted as a function of said affected energy;
(c) identifying at least one spectral shift in each said set of single-particle spectral fingerprint data associated with each said imaged particle, for forming an intra-particle crystallographic region group featuring a plurality of sub-sets of intra-particle spectral fingerprint pattern data, where value of at least one selected data element in each said sub-set is shifted relative to value of each corresponding said data element in each remaining said sub-set in same said intra-particle crystallographic region group;
(d) forming a set of intra-particle crystallographic parameter data relating to each said imaged particle, by performing pattern recognition and classification analysis on said intra-particle crystallographic region group of said imaged particle, including relating said plurality of sub-sets of intra-particle spectral fingerprint pattern data, exhibiting said at least one spectral shift, associated with said same set of single-particle spectral fingerprint data in said intra-particle crystallographic region group of each said imaged particle, to empirically determined sub-sets of intra-particle spectral fingerprint pattern data exhibiting spectral shifts associated with a same set of single-particle spectral fingerprint data in an intra-particle crystallographic region group of imaged particles, obtained and stored from said spectral imaging of calibration or standard samples of chemically pure crystalline particulate substances, each featuring known local, intra-particle, variation or heterogeneity in intra-particle crystallographic region groups of imaged particles throughout a said calibration or standard sample;
(e) generating each of the intra-particle crystallographic parameter maps of the chemically pure crystalline particulate substance from each said set of said intra-particle crystallographic parameter data; and
(f) generating each of the intra-particle crystallographic parameter histograms of the chemically pure crystalline particulate substance from a plurality of said sets of said intra-particle crystallographic parameter data of said number of particles of the chemically pure crystalline particulate substance.

2. The method of claim 1, further comprising illustrating intra-particle morphological or geometrical distribution of crystallographic parameters of the chemically pure crystalline particulate substance, by using a plurality of said sets of said intra-particle crystallographic parameter data of said number of particles of the chemically pure crystalline particulate substance.

3. The method of claim 1, wherein the chemically pure crystalline particulate substance is a crystalline particulate substance comprising a plurality of crystalline particles each composed of at least one chemically pure individual chemical compound.

4. The method of claim 3, wherein said at least one chemically pure individual chemical compound exhibits isomerism, and comprises a number of isomers.

5. The method of claim 3, wherein said at least one chemically pure individual chemical compound exhibits polymorphism, and comprises a number of polymorphs.

6. The method of claim 3, wherein the chemically pure crystalline particulate substance is heterogeneous with respect to morphological or geometrical distribution of crystallographic parameters of crystal type and crystal class, of said at least one chemically pure individual compound throughout a sample of the chemically pure crystalline particulate substance.

7. The method of claim 1, wherein physicochemical properties and characteristics of the chemically pure crystalline particulate substance are selected from the group consisting of independent of particle depth and dependent of particle depth.

8. The method of claim 1, wherein the chemically pure crystalline particulate substance is selected from the group consisting of a separate stand alone powdered entity or substance, and a powdered entity or substance part of another entity or substance in a solid or liquid phase having a function selected from the group consisting of as a substrate of, containing, hosting, delivering, receiving, and combinations thereof, the chemically pure crystalline particulate substance.

9. The method of claim 1, wherein the chemically pure crystalline particulate substance is a powder in a form selected from the group consisting of a powder and a powder mixture.

10. The method of claim 9, wherein said powder is in a configuration or form selected from the group consisting of loose or free flowing, packed, compacted, and combinations thereof.

11. The method of claim 9, wherein said powder is composed of components selected from the group consisting of inorganic components, organic components, and combinations thereof.

12. The method of claim 9, wherein said powder is of origin or derivation selected from the group consisting of natural origin or derivation, synthetic origin or derivation, and combinations thereof.

13. The method of claim 1, wherein the chemically pure crystalline particulate substance is a raw material used in manufacturing a product selected from the group consisting of a pharmaceutical product, a food product, and a beverage product.

14. The method of claim 1, wherein the chemically pure crystalline particulate substance is selected from the group consisting of a medicinal or therapeutic powder, a high performance powdered chemical, and a powdered biological specimen.

15. The method of claim 14, wherein said medicinal or therapeutic powder is part of a pharmaceutical product in a form selected from the group consisting of a tablet, a capsule, a caplet, a loose powder, a gel, a liquid suspension, and a liquid solution.

16. The method of claim 1, wherein step (a) said spectral images are focus-fusion multi-layer spectral images acquired by focus-fusion multi-layer spectral imaging of said particles of the chemically pure crystalline particulate substance.

17. The method of claim 1, wherein step (a) said spectral imaging system includes an imaging energy source supplying imaging source energy incident upon the chemically pure crystalline particulate substance, said imaging source energy is affected by said imaged particles by at least one mechanism selected from the group consisting of absorption, reflection, transmission, diffraction, scattering, fluorescence, and phosphorescence.

18. The method of claim 17, wherein said affected energy is expressed in a term selected from the group consisting of wavelength, frequency, and, wavenumber, of electromagnetic radiation emitted by said imaged particle.

19. The method of claim 1, wherein step (c) said identifying said at least one spectral shift is performed for each said imaged particle of the chemically pure crystalline particulate substance, for forming a plurality of said intra-particle crystallographic region groups of said sub-sets of said intra-particle spectral fingerprint pattern data relating to the entire chemically pure crystalline particulate substance.

20. The method of claim 1, wherein step (c) said at least one selected data element of said sub-sets of said intra-particle spectral fingerprint pattern data is selected from the group consisting of incident imaging energy affected by a said imaged particle, intensity or amplitude of said incident imaging energy affected by said imaged particle, and a combination thereof.

21. The method of claim 1, wherein step (c) said at least one selected data element of said sub-sets of said intra-particle spectral fingerprint pattern data is incident imaging energy affected by a said imaged particle.

22. The method of claim 1, wherein step (c) each said sub-set of said intra-particle spectral fingerprint pattern data is **characterized by** an intra-particle spectral fingerprint pattern spectrum featuring intensity or amplitude of incident imaging energy affected by a said imaged particle plotted as a function of said affected energy.

23. The method of claim 1, wherein step (d) said set of said intra-particle crystallographic parameter data features a plurality of intra-particle crystallographic region types.

24. The method of claim 23, wherein each said intra-particle crystallographic region type is associated with a crystal type and a crystal class of the chemically pure crystalline particulate substance.

25. The method of claim 1, wherein step (e) each crystallographic parameter map illustrates local, intra-particle, morphological or geometrical distribution of a plurality of crystallographic region types each associated with a crystal type and a crystal class of the chemically pure crystalline particulate substance throughout a said imaged particle.

26. The method of claim 1, wherein step (f) each intra-particle crystallographic parameter histogram illustrates a statistically based global morphological or geometrical frequency distribution of intra-particle crystallographic region types each associated with a crystal type and a crystal class of the chemically pure crystalline particulate substance throughout a sample of said number of particles of the chemically pure crystalline particulate substance.

27. The method of claim 1, wherein information and data provided in the intra-particle crystallographic parameter histogram generated by step (f) are used for a separation or purification process for the chemically pure crystalline particulate substance, according to average frequency distribution percent per said particle of intra-particle crystallographic region types.

## Patentansprüche

1. Verfahren zur Erzeugung von partikelinternen kristallographischen Parameterabbildungen und Histogrammen einer chemisch reinen kristallinen Teilchensubstanz, das folgende Schritte umfasst:
(a) Erfassen eines Satzes von Spektralbildern mithilfe eines Systems für die spektrale Abbildung von jedem einzelnen einer Reihe von Teilchen der chemisch reinen kristallinen Teilchensubstanz, die eine Vielzahl dieser Teilchen enthält, durch Anpassen und Einstellen des Systems für die spektrale Abbildung auf die spektrale Abbildung bei ausgewählten Sichtfeldern und bei ausgewählten unterschiedlichen Abbildungsdistanzen zu den Teilchen;
(b) Erstellen eines Satzes von spektralen Einzelpartikel-Fingerabdruckdaten aus den einzelnen Sätzen der erfassten Spektralbilder der einzelnen abgebildeten Teilchen, wobei jeder einzelne Satz von spektralen Einzelpartikel-Fingerabdruckdaten durch ein spektrales Einzelpartikel-Fingerabdruckspektrum gekennzeichnet ist, das die Intensität oder Amplitude der einfallenden Abbildungsenergie aufweist, die durch das abgebildete Teilchen beeinflusst und in der spektralen Abbildung erfasst und als Funktion der beeinflussten Energie dargestellt wird;
(c) Identifizieren von mindestens einer spektralen Verschiebung in jedem zu den einzelnen abgebildeten Teilchen gehörenden Satz von spektralen Einzelpartikel-Fingerabdruckdaten zum Erstellen einer partikelinternen kristallographischen Bereichsgruppe, die eine Vielzahl von Teilsätzen an partikelinternen spektralen Fingerabdruckmusterdaten aufweist, wobei der Wert von mindestens einem gewählten Datenelement in jedem Teilsatz relativ zu dem Wert des jeweils entsprechenden Datenelements in den jeweils verbleibenden Teilsätzen in derselben partikelinternen kristallographischen Bereichsgruppe verschoben wird;
(d) Erstellen eines zu den einzelnen abgebildeten Teilchen gehörenden Satzes an partikelinternen kristallographischen Parameterdaten durch Durchführen der Mustererkennung und Klassierungsanalyse an der partikelinternen kristallographischen Bereichsgruppe des abgebildeten Teilchens, einschließlich Zuordnen der Vielzahl von Teilsätzen an partikelinternen spektralen Fingerabdruckmusterdaten, welche die mindestens eine spektrale Verschiebung aufweisen, die zu demselben Satz an spektralen Einzelpartikel-Fingerabdruckdaten in der partikelinternen kristallographischen Bereichsgruppe des jeweils abgebildeten Teilchens gehört, zu empirisch bestimmten Teilsätzen von partikelinternen spektralen Fingerabdruckmusterdaten, welche die spektralen Verschiebungen aufweisen, die zu einem selben Satz an spektralen Einzelpartikel-Fingerabdruckdaten in einer partikelinternen kristallographischen Bereichsgruppe von abgebildeten Teilchen gehören, die in der spektralen Abbildung von Kalibrier-oder Standardproben von chemisch reinen kristallinen Teilchensubstanzen erfasst und gespeichert sind, welche jeweils eine bekannte lokale, partikelinterne Variation oder Heterogenität in partikelinternen kristallographischen Bereichsgruppen der abgebildeten Teilchen in der Kalibrier- oder Standardprobe aufweisen;
(e) Erzeugen der einzelnen partikelinternen kristallographischen Parameterabbildungen der chemisch reinen kristallinen Teilchensubstanz aus den einzelnen Sätzen an partikelinternen kristallographischen Parameterdaten; und
(f) Erzeugen der einzelnen partikelinternen kristallographischen Parameterhistogramme der chemisch reinen kristallinen Teilchensubstanz aus einer Vielzahl der Sätze an partikelinternen kristallographischen Parameterdaten der Reihe von Teilchen der chemisch reinen kristallinen Teilchensubstanz.

2. Verfahren nach Anspruch 1, das weiterhin das Darstellen der partikelinternen morphologischen oder geometrischen Verteilung der kristallographischen Parameter der chemisch reinen kristallinen Teilchensubstanz unter Verwendung einer Vielzahl der Sätze an partikelinternen kristallographischen Parameterdaten der Reihe von Partikeln der chemisch reinen kristallinen Teilchensubstanz umfasst.

3. Verfahren nach Anspruch 1, wobei die chemisch reine kristalline Teilchensubstanz eine kristalline Teilchensubstanz ist, welche eine Vielzahl von kristallinen Teilchen umfasst, die jeweils aus mindestens einer chemisch reinen chemischen Einzelverbindung zusammengesetzt sind.

4. Verfahren nach Anspruch 3, wobei die mindestens eine chemisch reine chemische Einzelverbindung Isomerie zeigt und eine Reihe von Isomeren umfasst.

5. Verfahren nach Anspruch 3, wobei die mindestens eine chemisch reine chemische Einzelverbindung Polymorphismus zeigt und eine Reihe von polymorphen Körpern umfasst.

6. Verfahren nach Anspruch 3, wobei die chemisch reine kristalline Teilchensubstanz heterogen ist im Hinblick auf die morphologische oder geometrische Verteilung der kristallographischen Parameter von Kristallart und Kristallklasse der mindestens einen chemisch reinen Einzelverbindung in einem Muster der chemisch reinen kristallinen Teilchensubstanz.

7. Verfahren nach Anspruch 1, wobei die physikochemischen Eigenschaften und Merkmale der chemisch reinen kristallinen Teilchensubstanz aus der Gruppe gewählt werden, die aus unabhängig von der Partikeltiefe und abhängig von der Partikeltiefe besteht.

8. Verfahren nach Anspruch 1, wobei die chemisch reine kristalline Teilchensubstanz aus der Gruppe gewählt wird, die aus einer separaten eigenständigen pulverisierten Einheit oder Substanz und einer pulverisierten Einheit oder Substanz besteht, die Teil einer weiteren Einheit oder Substanz in einer festen oder flüssigen Phase ist und eine Funktion aufweist, die aus folgender Gruppe gewählt wird: ist Substrat der chemisch reinen kristallinen Teilchensubstanz, enthält die chemisch reine kristalline Teilchensubstanz, ist Wirt der chemisch reinen kristallinen Teilchensubstanz, liefert die chemisch reine kristalline Teilchensubstanz, nimmt die chemisch reine kristalline Teilchensubstanz auf, oder Kombinationen daraus.

9. Verfahren nach Anspruch 1, wobei die chemisch reine kristalline Teilchensubstanz ein Pulver in einer Form ist, das aus der Gruppe bestehend aus einem Pulver und einer Pulvermischung gewählt wird.

10. Verfahren nach Anspruch 9, wobei das Pulver einen Aufbau oder eine Form aufweist, die aus der Gruppe bestehend aus lose oder frei rieselfähig, verpackt, verdichtet und Kombinationen daraus gewählt wird.

11. Verfahren nach Anspruch 9, wobei das Pulver aus Komponenten zusammengesetzt ist, die aus der Gruppe bestehend aus anorganischen Komponenten, organischen Komponenten und Kombinationen derselben gewählt werden.

12. Verfahren nach Anspruch 9, wobei das Pulver einen Ursprung oder eine Herleitung aus der Gruppe aufweist, die aus natürlichem Ursprung bzw. natürlicher Herleitung, synthetischem Ursprung bzw. synthetischer Herleitung und Kombinationen daraus besteht.

13. Verfahren nach Anspruch 1, wobei die chemisch reine kristalline Teilchensubstanz ein Rohstoff ist, der bei der Herstellung eines Produkts verwendet wird, das aus der Gruppe bestehend aus pharmazeutischem Produkt, Nahrungsmittel oder Getränk gewählt wird.

14. Verfahren nach Anspruch 1, wobei die chemisch reine kristalline Teilchensubstanz aus der Gruppe bestehend aus einem medizinischen oder therapeutischen Pulver, einer hochleistungsfähigen pulverisierten Chemikalie und einem pulverisierten biologischen Präparat gewählt wird.

15. Verfahren nach Anspruch 14, wobei das medizinische oder therapeutische Pulver Teil eines pharmazeutischen Produkts in einer Form ist, die aus der Gruppe bestehend aus einer Tablette, einer Kapsel, einer Kaplette, einem losen Pulver, einem Gel, einer flüssigen Suspension und einer flüssigen Lösung gewählt wird.

16. Verfahren nach Anspruch 1, wobei die Spektralbilder in Schritt (a) Fokus-Fusion-Mehrschicht-Spektralbilder sind, die durch die Fokus-Fusion-Mehrschicht-Spektralabbildung der Teilchen der chemisch reinen kristallinen Teilchensubstanz erfasst werden.

17. Verfahren nach Anspruch 1, wobei das System für die spektrale Abbildung in Schritt (a) eine Abbildungsenergiequelle enthält, welche die auf die chemisch reine kristalline Teilchensubstanz einfallende Abbildungsquellenergie liefert, wobei die Abbildungsquellenergie von den abgebildeten Teilchen durch mindestens einen Mechanismus beeinflusst wird, der aus der Gruppe bestehend aus Absorption, Reflexion, Transmission, Diffraktion, Streuung, Fluoreszenz und Phosphoreszenz gewählt wird.

18. Verfahren nach Anspruch 17, wobei die beeinflusste Energie in einem Term ausgedrückt wird, der aus der Gruppe bestehend aus Wellenlänge, Frequenz und Wellenzahl der von dem abgebildeten Teilchen emittierten elektromagnetischen Strahlung gewählt wird.

19. Verfahren nach Anspruch 1, wobei das Identifizieren von mindestens einer spektralen Verschiebung in Schritt (c) für jedes abgebildete Teilchen der chemisch reinen kristallinen Teilchensubstanz durchgeführt wird, um eine Vielzahl der partikelinternen kristallographischen Bereichsgruppen der Teilsätze der partikelinternen spektralen Fingerabdruckmusterdaten zu erstellen, die sich auf die gesamte chemisch reine kristalline Teilchensubstanz beziehen.

20. Verfahren nach Anspruch 1, wobei das mindestens eine gewählte Datenelement der Teilsätze der partikelinternen spektralen Fingerabdruckmusterdaten in Schritt (e) aus der Gruppe gewählt wird, die aus der von dem abgebildeten Teilchen beeinflussten einfallenden Abbildungsenergie, der von dem abgebildeten Teilchen beeinflussten Intensität oder Amplitude der einfallenden Abbildungsenergie und einer Kombination daraus besteht.

21. Verfahren nach Anspruch 1, wobei das mindestens eine gewählte Datenelement der Teilsätze der partikelinternen spektralen Fingerabdruckmusterdaten in Schritt (c) die von dem abgebildeten Teilchen beeinflusste einfallende Abbildungsenergie ist.

22. Verfahren nach Anspruch 1, wobei jeder Teilsatz an partikelinternen spektralen Fingerabdruckmusterdaten in Schritt (c) durch ein partikelinternes spektrales Fingerabdruckmusterspektrum gekennzeichnet ist, das die Intensität oder Amplitude der einfallenden Abbildungsenergie aufweist, die durch das abgebildete Teilchen beeinflusst und als Funktion der beeinflussten Energie dargestellt wird.

23. Verfahren nach Anspruch 1, wobei der Satz an partikelinternen kristallographischen Parameterdaten in Schritt (d) eine Vielzahl von partikelinternen kristallographischen Bereichsarten aufweist.

24. Verfahren nach Anspruch 23, wobei die partikelinterne kristallographische Bereichsart mit einer Kristallart und einer Kristallklasse der chemisch reinen kristallinen Teilchensubstanz verbunden ist.

25. Verfahren nach Anspruch 1, wobei jede kristallographische Parameterabbildung in Schritt (e) die lokale, partikelinterne, morphologische oder geometrische Verteilung einer Vielzahl von kristallographischen Bereichsarten darstellt, die jeweils mit einer Kristallart und einer Kristallklasse der chemisch reinen kristallinen Teilchensubstanz im gesamten abgebildeten Teilchen verbunden sind.

26. Verfahren nach Anspruch 1, wobei jedes partikelinterne kristallographische Parameterhistogramm in Schritt (f) eine statistisch basierte globale morphologische oder geometrische Frequenzverteilung der partikelinternen kristallographischen Bereichsarten darstellt, die jeweils mit einer Kristallart und einer Kristallklasse der chemisch reinen kristallinen Teilchensubstanz in einer Probe der Reihe von Partikeln der chemisch reinen kristallinen Teilchensubstanz verbunden sind.

27. Verfahren nach Anspruch 1, wobei die Informationen, die in dem in Schritt (f) erzeugten partikelinternen kristallographischen Parameterhistogramm enthalten sind, für ein Trenn-oder Reinigungsverfahren für die chemisch reine kristalline Teilchensubstanz verwendet werden, gemäß einer durchschnittlichen prozentualen Frequenzverteilung pro Partikel der partikelinternen kristallographischen Bereichsarten.

## Revendications

1. Procédé pour générer des cartes et des histogrammes de paramètres cristallographiques entre particules de substance particulaire cristalline de pureté chimique comprenant les étapes :
(a) d'acquisition d'un ensemble d'images spectrales par un système d'imagerie spectrale pour chacune des particules d'un nombre de particules de la substance particulaire cristalline de pureté chimique ayant une pluralité des particules mentionnées en ajustant et en réglant ledit système d'imagerie spectrale pour une imagerie spectrale à des champs de vision sélectionnés et à des distances d'imagerie différenciées sélectionnées sur lesdites particules ;
(b) de formation d'un ensemble de données d'empreintes digitales spectrales de particules uniques de chaque ensemble d'images spectrales acquises mentionné, chaque ensemble de données d'empreintes digitales spectrales de particules uniques mentionné étant **caractérisé par** un spectre d'empreintes digitales spectrales de particules uniques, caractérisant l'intensité ou l'amplitude de l'énergie d'imagerie incidente affectée par ladite particule numérisée et recueilli pendant ladite imagerie spectrale, représenté comme une fonction de ladite énergie affectée ;
(c) d'identification d'au moins un décalage spectral dans chaque ensemble de données d'empreintes digitales spectrales de particules uniques mentionné associé à chaque particule numérisée pour former un groupe de région cristallographique caractérisant une pluralité de sous-ensembles de données d'empreintes digitales spectrales entre particules dans lesquels la valeur d'au moins un élément de données sélectionné dans chaque sous-ensemble mentionné est décalé par rapport à la valeur de chaque élément de donnée correspondant dans chaque sous-ensemble mentionné restant dans le même groupe de région cristallographique entre particules mentionné;
(d) de formation d'un ensemble de données de paramètres cristallographiques entre particules ayant rapport à chaque particule numérisée mentionnée en réalisant une reconnaissance de configurations et une analyse de classification sur ladite région cristallographique entre particules comprenant la mise en relation de la pluralité mentionnée de sous-ensembles de données de formes et de structures d'empreintes digitales spectrales entre particules, le fait de montrer au moins un décalage spectral mentionné, associé audit même ensemble de données d'empreintes digitales spectrales de particules uniques dans ledit groupe de région cristallographique entre particules de chaque particule numérisée mentionnée pour déterminer empiriquement des sous-ensembles de données de configurations d'empreintes digitales spectrales entre particules montrant des décalages spectraux associés à un même ensemble de données d'empreintes digitales spectrales de particules uniques dans un groupe de région cristallographique entre particules de particules numérisées, obtenu et mémorisé à partir de ladite imagerie spectrale d'étalonnage ou d'échantillons standard de substances à particules cristallines de pureté chimique, chacun caractérisant une variation ou une hétérogénéité locale connue entre particules dans des groupes de région cristallographique entre particules de particules numérisées dans la totalité de l'échantillonnage ou de l'échantillon standard ;
(e) de génération de chacune des cartes de paramètres cristallographiques entre particules de substance particulaire cristalline de pureté chimique de chaque ensemble mentionné de données de paramètres cristallographiques entre particules et
(f) de génération de chacun des histogrammes de paramètres cristallographiques entre particules de substance particulaire cristalline de pureté chimique d'une pluralité d'ensembles mentionnés de données de paramètres cristallographiques entre particules du nombre mentionné de particules de la substance particulaire cristalline de pureté chimique.

2. Procédé selon la revendication 1 comprenant de plus l'illustration de la distribution morphologique ou géométrique entre particules de paramètres cristallographiques de substance particulaire cristalline de pureté chimique en utilisant une pluralité des ensembles mentionnés de données mentionnées de paramètres cristallographiques entre particules du nombre mentionné de particules de la substance particulaire cristalline de pureté chimique.

3. Procédé selon la revendication 1 dans lequel la substance particulaire cristalline de pureté chimique est une substance particulaire cristalline comprenant une pluralité de particules cristallines, chacune étant composée d'au moins un composé chimique individuel pur chimiquement.

4. Procédé selon la revendication 3 dans lequel ledit composé chimique individuel pur chimiquement qui existe au moins présente de l'isomérisme et comprend un nombre d'isomères.

5. Procédé selon la revendication 3 dans lequel ledit composé chimique individuel pur chimiquement qui existe au moins présente du polymorphisme et comprend un nombre de polymorphes.

6. Procédé selon la revendication 3 dans lequel la substance particulaire cristalline de pureté chimique est hétérogène par rapport à la distribution morphologique ou géométrique de paramètres cristallographiques de type de cristaux et de classe de cristaux du composé chimique individuel pur chimiquement qui existe au moins dans la totalité de l'échantillon de la substance particulaire cristalline de pureté chimique.

7. Procédé selon la revendication 1 dans lequel les propriétés et caractéristiques physico-chimiques de la substance particulaire cristalline de pureté chimique sont sélectionnées dans le groupe consistant en indépendant de la profondeur des particules et dépendant de la profondeur des particules.

8. Procédé selon la revendication 1 dans lequel la substance particulaire cristalline de pureté chimique est sélectionnée dans le groupe consistant en une entité ou substance en poudre isolée séparée et une entité ou une partie de substance d'une autre entité ou substance dans une phase solide ou liquide qui a une fonction sélectionnée dans le groupe composé de la substance particulaire cristalline de pureté chimique comme un substrat de, contenant, accueillant, fournissant, recevant et des combinaisons de ceux-ci.

9. Procédé selon la revendication 1 dans lequel la substance particulaire cristalline de pureté chimique est une poudre sous une forme sélectionnée dans le groupe consistant en une poudre et un mélange de poudre.

10. Procédé selon la revendication 9 dans lequel ladite poudre est dans une configuration ou une forme sélectionnée dans le groupe composé de en vrac ou à écoulement libre, tassé, compacté et des combinaisons de ceux-ci.

11. Procédé selon la revendication 9 dans lequel ladite poudre est composée de composés sélectionnés dans le groupe composé des composants anorganiques, des composants organiques et des combinaisons de ceux-ci.

12. Procédé selon la revendication 9 dans lequel ladite poudre est d'origine ou de dérivation sélectionnée dans le groupe composé de origine naturelle ou dérivée, origine synthétique ou dérivée et des combinaisons de ceux-ci.

13. Procédé selon la revendication 1 dans lequel la substance particulaire cristalline de pureté chimique est un matériau brut utilisé en fabriquant un produit sélectionné dans le groupe composé d'un produit pharmaceutique, d'un produit alimentaire et d'un produit de type boisson.

14. Procédé selon la revendication 1 dans lequel la substance particulaire cristalline de pureté chimique est sélectionnée dans le groupe composé d'une poudre médicale ou thérapeutique, d'une substance chimique en poudre à haut rendement et d'un spécimen biologique en poudre.

15. Procédé selon la revendication 14 dans lequel ladite poudre médicale ou thérapeutique est une partie d'un produit pharmaceutique sous une forme sélectionnée dans le groupe composé d'un comprimé, d'une capsule, d'un caplet, d'une poudre en vrac, d'un gel, d'une suspension liquide et d'une solution liquide.

16. Procédé selon la revendication 1 dans lequel l'étape (a) lesdites images spectrales sont des images spectrales multicouches à fusion de foyer desdites particules de la substance particulaire cristalline de pureté chimique.

17. Procédé selon la revendication 1 dans lequel l'étape (a) ledit système d'imagerie spectrale comprend une source d'énergie d'imagerie qui fournit de l'énergie de source d'imagerie incidente par la substance particulaire cristalline de pureté chimique, ladite énergie de source d'imagerie étant affectée par lesdites particules numérisée par au moins un mécanisme sélectionné dans le groupe composé de l'absorption, la réflexion, la transmission, la diffraction, la diffusion, la fluorescence et la phosphorescence.

18. Procédé selon la revendication 17 dans lequel l'énergie affectée est exprimée en un terme sélectionné dans le groupe composé de longueur d'onde, fréquence et nombre d'ondes de la radiation électromagnétique émise par ladite particule numérisée.

19. Procédé selon la revendication 1 dans lequel l'étape (c) ladite identification dudit décalage spectral qui existe au moins est réalisée pour chaque particule numérisée mentionnée de la substance particulaire cristalline de pureté chimique pour former une pluralité de groupes de régions cristallographiques entre particules mentionnés des sous-ensembles mentionnés des données de configurations d'empreintes digitales spectrales entre particules mentionnées ayant rapport à la substance particulaire cristalline de pureté chimique entière.

20. Procédé selon la revendication 1 dans lequel l'étape (c) ledit élément de données sélectionné qui existe au moins des sous-ensembles mentionnés des données de configurations d'empreintes digitales spectrales entre particules mentionnées est sélectionné dans le groupe composé de l'énergie d'imagerie incidente affectée par une particule numérisée mentionnée, l'intensité ou l'amplitude de ladite énergie d'imagerie incidente affectée par ladite particule numérisée et une combinaison de celles-ci.

21. Procédé selon la revendication 1 dans lequel l'étape (c) ledit élément de données sélectionné qui existe au moins des sous-ensembles mentionnés des données de configurations d'empreintes digitales spectrales entre particules mentionnées est l'énergie d'imagerie incidente affectée par une particule numérisée mentionnée.

22. Procédé selon la revendication 1 dans lequel l'étape (c) chaque sous-ensemble mentionné de données de configurations d'empreintes digitales spectrales entre particules mentionnées est **caractérisé par** un spectre de configurations d'empreintes digitales spectrales entre particules caractérisant l'intensité ou l'amplitude de l'énergie d'imagerie incidente affectée par une particule numérisée mentionnée représenté comme une fonction de ladite énergie affectée.

23. Procédé selon la revendication 1 dans lequel l'étape (d) ledit ensemble de données de paramètres cristallographiques entre particules mentionné caracté-rise une pluralité de types de régions cristallographiques entre particules.

24. Procédé selon la revendication 23 dans lequel chaque type de région cristallographique entre particules est associé à un type de cristaux et à une classe de cristaux de la substance particulaire cristalline de pureté chimique.

25. Procédé selon la revendication 1 dans lequel l'étape (e) chaque carte de paramètres cristallographiques illustre la distribution morphologique ou géométrique entre particules locale d'une pluralité de types de régions cristallographiques, chacun associé à un type de cristaux et à une classe de cristaux de la substance particulaire cristalline de pureté chimique dans toute une particule numérisée mentionnée.

26. Procédé selon la revendication 1 dans lequel l'étape (f) chaque histogramme de paramètres cristallographiques entre particules illustre une distribution de fréquence morphologique ou géométrique globale basée statistiquement de types de régions cristallographiques entre particules, chacun associé à un type de cristaux et à une classe de cristaux de la substance particulaire cristalline de pureté chimique dans tout un échantillon du nombre mentionné de particules de la substance particulaire cristalline de pureté chimique.

27. Procédé selon la revendication 1 dans lequel les informations et données fournies dans l'histogramme de paramètres cristallographiques entre particules généré par l'étape (f) sont utilisées pour un processus de séparation ou de purification pour la substance particulaire cristalline de pureté chimique selon le pourcentage de distribution de fréquence moyen par particule mentionnée de types de région cristallographiques entre particules.
